# EUROPEAN PATENT SPECIFICATION

(11) **EP 3 246 553 B1**
(45) Date of publication and mention of the grant of the patent: **07.04.2021**
(21) Application number: 16737403.2
(22) Date of filing: 14.01.2016
(51) Int. Cl.: F02F 1/14, F01P 3/02, B29C 45/27, B29C 45/33

(54) **PRODUCTION METHOD FOR WATER JACKET SPACER**
HERSTELLUNGSVERFAHREN FÜR WASSERMANTELABSTANDSHALTER
PROCÉDÉ DE FABRICATION D'ENTRETOISE POUR CHEMISE D'EAU

(30) Priority: 16.01.2015 JP 2015006452; 16.12.2015 JP 2015245457
(43) Date of publication of application: 22.11.2017
(73) Proprietor: Nichias Corporation, Tokyo 104-8555 (JP)
(72) Inventor: FUJITA, Yoshifumi, Tokyo 104-8555 (JP); UCHIDA, Shota, Tokyo 104-8555 (JP)
(74) Representative: Grünecker Patent- und Rechtsanwälte PartG mbB
(86) International application number: PCT/JP2016/050899
(87) International publication number: WO 2016/114332

(56) References cited:
- EP-A1- 0 611 038
- JP-A- H06 173 675
- JP-A- H11 223 186
- JP-A- 2003 305 752
- JP-A- 2005 105 878
- JP-A- 2005 120 949
- JP-A- 2008 031 939
- JP-A- 2012 036 742
- JP-A- 2015 222 071
- US-A1- 2005 120 653

## Description

### TECHNICAL FIELD

The present invention relates to a method for producing a water jacket spacer that is disposed in a groove-like coolant passage formed in a cylinder block provided to an internal combustion engine.

### BACKGROUND ART

An internal combustion engine is designed so that fuel explodes within the cylinder bore when the piston is positioned at top dead center, and the piston is moved downward due to the explosion. Therefore, the upper part of the cylinder bore wall increases in temperature as compared with the lower part of the cylinder bore wall. Accordingly, a difference in the amount of thermal deformation occurs between the upper part and the lower part of the cylinder bore wall (i.e., the upper part of the cylinder bore wall expands to a large extent as compared with the lower part of the cylinder bore wall).

As a result, the frictional resistance of the piston against the cylinder bore wall increases, and the fuel consumption increases. Therefore, a reduction in difference in the amount of thermal deformation between the upper part and the lower part of the cylinder bore wall has been desired.

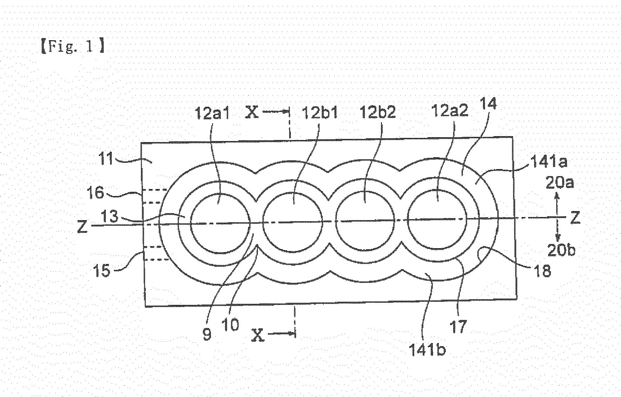

FIG. 1 illustrates an example of a cylinder block. The cylinder block includes a plurality of cylinder bores that are formed in series, and a groove-like coolant passage is formed to completely surround each cylinder bore.

Attempts have been made to control the cooling efficiency in the upper part and the lower part of the cylinder bore wall due to the coolant by disposing a water jacket spacer in a groove-like coolant passage to adjust the flow of the coolant in the groove-like coolant passage so that the cylinder bore wall has a uniform temperature. An example of a water jacket coolant spacer produced by injection molding is shown in US 2005/120653 A1. Another example, Patent Literature 1 discloses an internal combustion engine heating medium passage partition member that is disposed in a groove-like heating medium passage formed in a cylinder block of an internal combustion engine to divide the groove-like heating medium passage into a plurality of passages, the heating medium passage partition member including a passage division member that is formed at a height above the bottom of the groove-like heating medium passage, and serves as a wall that divides the groove-like heating medium passage into a bore-side passage and a non-bore-side passage, and a flexible lip member that is formed from the passage division member in the opening direction of the groove-like heating medium passage, the edge area of the flexible lip member being formed of a flexible material to extend beyond the inner surface of one of the groove-like heating medium passages, and coming in contact with the inner surface at a middle position of the groove-like heating medium passage in the depth direction due to the flexure restoring force after insertion into the groove-like heating medium passage to separate the bore-side passage and the non-bore-side passage.

### CITATION LIST

### PATENT LITERATURE

Patent Literature 1: JP-A-2008-31939 (claims)

### SUMMARY OF INVENTION

### TECHNICAL PROBLEM

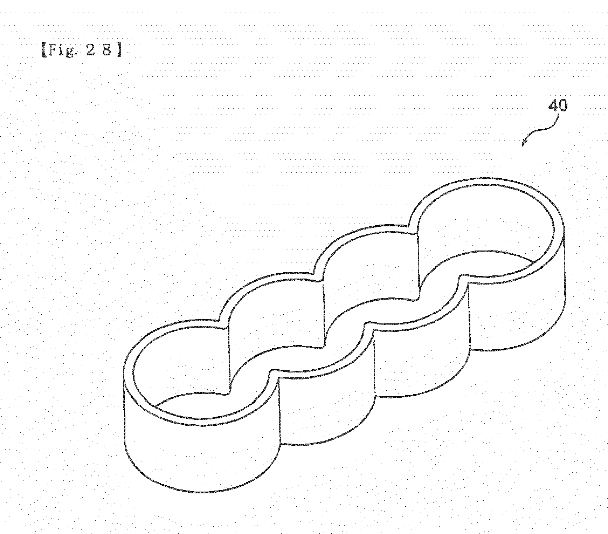

A known water jacket spacer that is disposed in the groove-like coolant passage provided to the cylinder block has a shape that surrounds the entirety of the cylinder bores. For example, a water jacket spacer 40 illustrated in FIG 28 has a shape that surrounds the entirety of the cylinder bores (i.e., a tubular water jacket spacer that is constricted at three positions that correspond to an area between the cylinder bores) is disposed in the groove-like coolant passage provided to the cylinder block illustrated in FIG. 1. The water jacket spacer disclosed in Patent Literature 1 has a shape that surrounds the entirety of the cylinder bores.

Such a water jacket spacer is produced by subjecting a synthetic resin to an injection molding process.

Since the water jacket spacer that has a shape that surrounds the entirety of the cylinder bores extends through the entirety of the groove-like coolant passage provided to the cylinder block along the circumferential direction, it is difficult to selectively and significantly change the flow rate of the coolant using such a water jacket spacer with respect to part of the groove-like coolant passage along the circumferential direction.

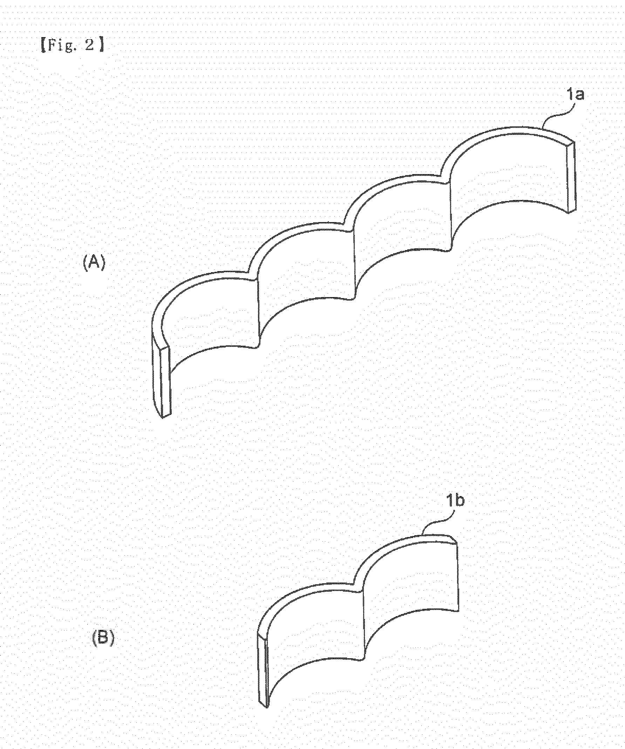

In order to selectively (partially) control the flow rate of the coolant that flows through the groove-like coolant passage, it is necessary to provide a water jacket spacer that has a shape that corresponds to part of the groove-like coolant passage along the circumferential direction. For example, it is necessary to use a water jacket spacer 1a or 1b illustrated in FIG. 2. The water jacket spacer 1a has a shape that corresponds to half of the groove-like coolant passage provided to the cylinder block (see FIG. 1) along the circumferential direction, and the water jacket spacer 1b has a shape that corresponds to part (two intermediate bores) of half of the groove-like coolant passage provided to the cylinder block (see FIG. 1) along the circumferential direction.

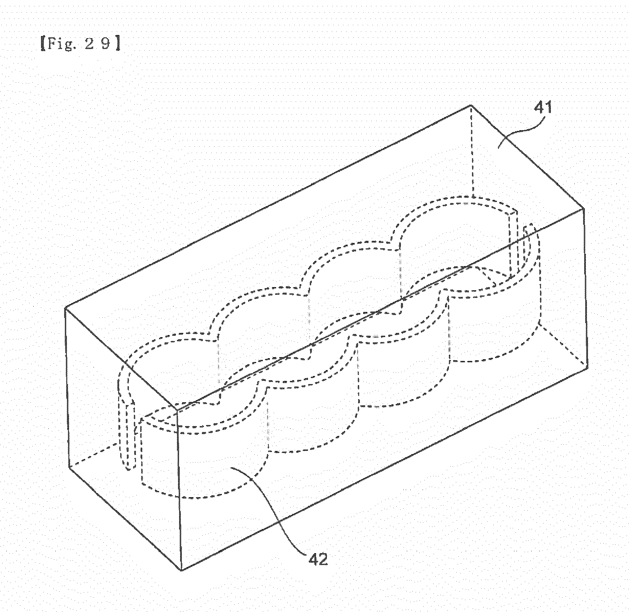

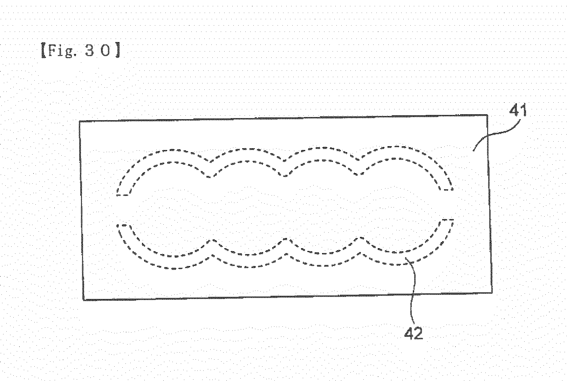

Such a water jacket spacer is also produced by means of an injection molding process. The injection molding process that is used to produce such a water jacket spacer utilizes an injection mold 41 illustrated in FIGS. 29 and 30 that forms a molding space 42 that produces a molded product in which the inner sides of two water jacket spacers are situated opposite to each other, from the viewpoint of production efficiency. Note that the molded product obtained by the injection molding process includes a main body, a spool that serves as a molten resin passage that extends from a nozzle of an injection molding machine to a runner, a runner that serves as an intermediate molten resin passage that extends from the spool to a gate, and a gate that serves as an inlet through which a molten resin flows from the runner into the molding space (main body molding space).

The injection molding process that is used to produce a molded product in which the inner sides of two water jacket spacers are situated opposite to each other, may utilize an injection mold that includes a stationary mold, a movable mold that moves in the upward-downward direction with respect to the water jacket spacer, and a slide mold that moves in a direction at an angle of ±15° or less with respect to a direction that is perpendicular to the direction in which the cylinder bores are arranged, and is perpendicular to the moving direction of the movable mold, and forms a molding space that produces a molded product in which the inner sides of two water jacket spacers are situated opposite to each other, when clamped, clamp the injection mold, inject a synthetic resin in a molten state, cool/solidify the synthetic resin while keeping pressure, open the injection mold, and remove the molded product from the movable mold, for example.

When such an injection molding process is used, since the main body of the molded product adheres to the injection mold before the injection mold is opened, the main body is pulled by the slide mold when the slide mold moves in a direction at an angle of ±15° or less with respect to a direction that is perpendicular to a direction in which the cylinder bores are arranged, and is perpendicular to the moving direction of the movable mold, so as to move away from the main body. Since the ends of the two water jacket spacers that are designed to be disposed in half or part of half of the groove-like coolant passage are not liked to each other, an adhesion-to-slide phenomenon in which the main body adheres to and is pulled by the slide mold occurs when the injection mold is opened.

The above injection molding process is normally computer-controlled so that the clamping step, the injection step, the solidification step, the mold-opening step, and the ejection step are automatically performed, and the mold-opening step is programmed so that the molded product that adheres to the movable mold is removed. Therefore, it is impossible to implement normal operation if an adhesion-to-slide phenomenon has occurred.

An object of the invention is to provide a method for producing a water jacket spacer that can produce a water jacket spacer having a shape that corresponds to part of the groove-like coolant passage in the circumferential direction by means of injection molding while preventing the occurrence of an adhesion-to-slide phenomenon when the mold is opened.

### SOLUTION TO PROBLEM

According to one aspect of the invention, the above technical problem is solved by the following method for producing a water jacket spacer.
(1) A method for producing a water jacket spacer including subjecting a synthetic resin to an injection molding process to produce a water jacket spacer, the water jacket spacer being disposed in the entirety or part of a groove-like coolant passage along a circumferential direction, the groove-like coolant passage being provided to a cylinder block of an internal combustion engine that has cylinder bores,
   the injection molding process including a clamping step that clamps an injection mold, an injection step that injects the synthetic resin in a molten state, a solidification step that cools and solidifies the synthetic resin while keeping pressure, a mold-opening step that opens the injection mold, and an ejection step that ejects an integrally molded product from the injection mold,
   the injection mold including a stationary mold, a movable mold that moves in an upward-downward direction with respect to the water jacket spacer, and at least one slide mold (1) that moves in a direction at an angle of ±15° or less with respect to a direction that is perpendicular to a direction in which the cylinder bores are arranged, and is perpendicular to a moving direction of the movable mold, and forming a molding space when clamped by the clamping step, the molding space producing the integrally molded product that comprises at least a first water jacket spacer having a shape formed by one arc or a shape formed by two or more arcs that are linked to each other when viewed from above, a second water jacket spacer having a shape formed by one arc or a shape formed by two or more arcs that are linked to each other when viewed from above, and a bridge, the first water jacket spacer and the second water jacket spacer being provided so that the inner sides thereof are situated opposite to each other, and the bridge linking the inner side or the end of the first water jacket spacer, and the inner side or the end of the second water jacket spacer, and
   the mold-opening step moving the movable mold in the upward-downward direction with respect to the water jacket spacer, and moving the slide mold (1) in a direction at an angle of ±15° or less with respect to the direction that is perpendicular to the direction in which the cylinder bores are arranged, and is perpendicular to the moving direction of the movable mold, to open the injection mold.
(2) The method for producing a water jacket spacer according to (1), wherein the bridge includes an inter-bore bridge that links an inner side of an inter-bore part of the first water jacket spacer, and an inner side of an inter-bore part of the second water jacket spacer, and an end bridge that links the end of the first water jacket spacer and the end of the second water jacket spacer.
(3) The method for producing a water jacket spacer according to (2), wherein the integrally molded product further includes an inter-bridge bridge that links a center area of the inter-bore bridge and a center area of the end bridge that is situated adjacent to the inter-bore bridge, or links center areas of the inter-bore bridges that are situated adjacent to each other.

### ADVANTAGEOUS EFFECTS OF INVENTION

One aspect of the invention thus provides a method for producing a water jacket spacer that can produce a water jacket spacer having a shape that corresponds to part of the groove-like coolant passage in the circumferential direction by means of injection molding while preventing the occurrence of an adhesion-to-slide phenomenon when the mold is opened.

### BRIEF DESCRIPTION OF DRAWINGS

FIG. 1 is a schematic plan view illustrating an example of a cylinder block in which a water jacket spacer is disposed.
FIG 2 is a schematic perspective view illustrating an example of a water jacket spacer that is produced using a method for producing a water jacket spacer according to one embodiment of the invention.
FIG. 3 is a schematic end view illustrating an injection molding process that is implemented by a method for producing a water jacket spacer according to one embodiment of the invention.
FIG. 4 is a schematic end view illustrating an injection molding process that is implemented by a method for producing a water jacket spacer according to one embodiment of the invention.
FIG. 5 is a schematic end view illustrating an injection molding process that is implemented by a method for producing a water jacket spacer according to one embodiment of the invention.
FIG. 6 is a schematic end view illustrating an injection molding process that is implemented by a method for producing a water jacket spacer according to one embodiment of the invention.
FIG. 7 is a schematic end view illustrating an injection molding process that is implemented by a method for producing a water jacket spacer according to one embodiment of the invention.
FIG. 8 is a schematic end view illustrating an injection molding process that is implemented by a method for producing a water jacket spacer according to one embodiment of the invention.
FIG. 9 is a schematic perspective view illustrating an example of an integrally molded product that is produced using a method for producing a water jacket spacer according to one embodiment of the invention.
FIG. 10 is a schematic end view illustrating an injection molding process that is implemented by a method for producing a water jacket spacer according to one embodiment of the invention.
FIG. 11 is a schematic end view illustrating an injection molding process that is implemented by a method for producing a water jacket spacer according to one embodiment of the invention.
FIG. 12 is a schematic end view illustrating an injection molding process that is implemented by a method for producing a water jacket spacer according to one embodiment of the invention.
FIG 13 is a schematic end view illustrating an injection molding process that is implemented by a method for producing a water jacket spacer according to one embodiment of the invention.
FIG. 14 is a schematic end view illustrating an injection molding process that is implemented by a method for producing a water jacket spacer according to one embodiment of the invention.
FIG. 15 is a schematic end view illustrating an injection molding process that is implemented by a method for producing a water jacket spacer according to one embodiment of the invention.
FIG. 16 is a schematic end view illustrating an injection molding process that is implemented by a method for producing a water jacket spacer according to one embodiment of the invention.
FIG. 17 is a schematic end view illustrating an injection molding process that is implemented by a method for producing a water jacket spacer according to one embodiment of the invention.
FIG. 18 is a schematic end view illustrating an injection molding process that is implemented by a method for producing a water jacket spacer according to one embodiment of the invention.
FIG. 19 is a schematic end view illustrating an injection molding process that is implemented by a method for producing a water jacket spacer according to one embodiment of the invention.
FIG. 20 is a schematic end view illustrating an injection molding process that is implemented by a method for producing a water jacket spacer according to one embodiment of the invention.
FIG. 21 is a schematic plan view illustrating an example of an integrally molded product.
FIG. 22 is a schematic perspective view illustrating an example of an integrally molded product.
FIG. 23 is a schematic plan view illustrating an example of an integrally molded product.
FIG. 24 is a schematic plan view illustrating an example of an integrally molded product.
FIG. 25 is a schematic plan view illustrating an example of a bridge.
FIG. 26 is a schematic plan view illustrating an example of an integrally molded product.
FIG. 27 is a schematic plan view illustrating an example of an integrally molded product.
FIG. 28 is a schematic perspective view illustrating a known water jacket spacer.
FIG. 29 is a perspective view illustrating a virtual mold.
FIG. 30 is a plan view illustrating the virtual mold illustrated in FIG. 29.

### DESCRIPTION OF EMBODIMENTS

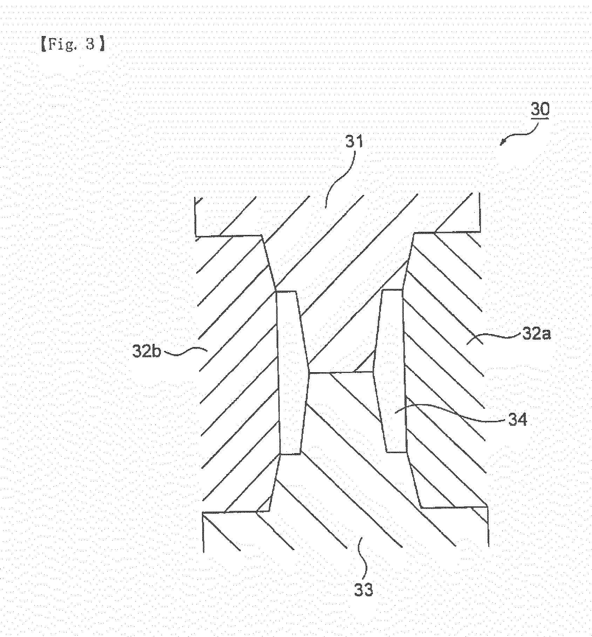

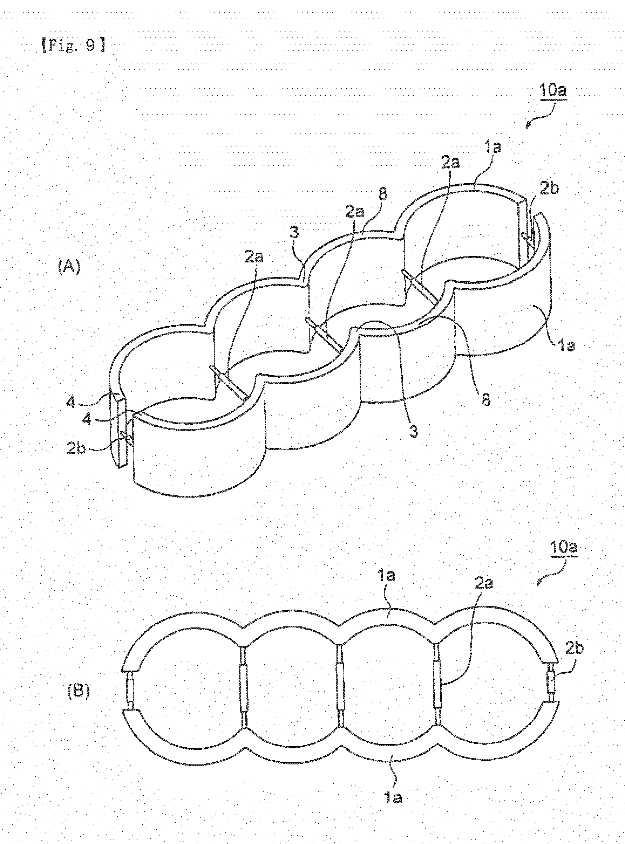

A method for producing a water jacket spacer according to one embodiment of the invention is described below with reference to FIGS. 1 to 9. FIG. 1 is a schematic plan view illustrating an example of a cylinder block in which a water jacket spacer that is produced using the method for producing a water jacket spacer according to one embodiment of the invention, is disposed. FIG. 2 is a schematic perspective view illustrating an example of a water jacket spacer that is produced using the method for producing a water jacket spacer according to one embodiment of the invention. FIGS. 3 to 8 are schematic end views illustrating an example of an injection molding process that is implemented by the method for producing a water jacket spacer according to one embodiment of the invention. FIG. 9 is a schematic view illustrating an example of an integrally molded product that is produced using the method for producing a water jacket spacer according to one embodiment of the invention, wherein (A) is a perspective view, and (B) is a top view.

The water jacket spacer 1a illustrated in FIG. 2 is produced using the method for producing a water jacket spacer according to one embodiment of the invention, and is disposed in a cylinder block 11 illustrated in FIG. 1. The water jacket spacer 1a is disposed in the open-deck cylinder block 11 provided to an internal combustion engine that is mounted on a vehicle (see FIG.1). The cylinder block 11 includes bores 12 and a groove-like coolant passage 14, a piston moving upward and downward in each bore 12, and a coolant flowing through the groove-like coolant passage 14. The boundary between the bores 12 and the groove-like coolant passage 14 is defined by a cylinder bore wall 13. The cylinder block 11 also includes a coolant inlet 15 for supplying the coolant to the groove-like coolant passage 11, and a coolant outlet 16 for discharging the coolant from the groove-like coolant passage 11.

The cylinder block 11 includes two or more bores 12 that are formed (arranged) in series. Specifically, the bores 12 include end bores 12a1 and 12a2 that are formed to be adjacent to one bore, and intermediate bores 12b1 and 12b2 that are formed between two bores. Note that only the end bores are provided when the number of bores formed in the cylinder block is 2. The end bores 12al and 12a2 among the bores 12 that are arranged in series are bores situated on either end, and the intermediate bores 12b1 and 12b2 among the bores 12 that are arranged in series are bores situated between the end bore 12a1 situated on one end and the end bore 12a2 situated on the other end. An inter-bore wall 9 is formed between the end bore 12a1 and the intermediate bore 12b1, for example. Since heat is transmitted to the inter-bore wall 9 (that is situated between two cylinder bores) from two cylinder bores, the temperature of the inter-bore wall 9 increases as compared with the walls other than the inter-bore wall 9. A cylinder bore-side wall surface 17 that defines the groove-like coolant passage 14 defines a boundary 101 with respect to each bore. The wall surface of the groove-like coolant passage 14 that is situated on the side of the cylinder bores is referred to as "cylinder bore-side wall surface 17", and the wall surface of the groove-like coolant passage 14 that is situated opposite to the cylinder bore-side wall surface 17 is referred to as "wall surface 18".

Half of the groove-like coolant passage along the circumferential direction refers to half of the groove-like coolant passage when the groove-like coolant passage is equally divided into two segments in the vertical direction along the direction in which the cylinder bores are arranged. In the example illustrated in FIG. 1, the cylinder bores are arranged in the direction that extends along the line Z-Z, and half of the groove-like coolant passage refers to half of the groove-like coolant passage when the groove-like coolant passage is equally divided into two segments in the vertical direction along the direction that extends along the line Z-Z. In the example illustrated in FIG. 1, half of the groove-like coolant passage that is situated on the side indicated by 20a with respect to the line Z-Z is a groove-like coolant passage 141a that forms half of the groove-like coolant passage along the circumferential direction, and half of the groove-like coolant passage that is situated on the side indicated by 20b with respect to the line Z-Z is a groove-like coolant passage 141b that forms half of the groove-like coolant passage along the circumferential direction. Half of the groove-like coolant passage along the circumferential direction refers to the groove-like coolant passage 141a or the groove-like coolant passage 141b.

Examples of the water jacket spacer that is disposed in the groove-like coolant passage 14 provided to the cylinder block 11 illustrated in FIG. 1 include the water jacket spacer 1a (see (A) in FIG. 2) and the water jacket spacer 1b (see (B) in FIG. 2). The water jacket spacer 1a is disposed in the groove-like coolant passage 141a (that forms half of the groove-like coolant passage 14 along the circumferential direction) that is provided to the cylinder block 11 illustrated in FIG. 1. The water jacket spacer 1b is disposed in part of the groove-like coolant passage 141a (that forms half of the groove-like coolant passage 14 along the circumferential direction) that is provided to the cylinder block 11 illustrated in FIG. 1, and corresponds to the cylinder bores 12b1 and 12b2. Further examples of the water jacket spacer that is disposed in the groove-like coolant passage 14 provided to the cylinder block 11 include a water jacket spacer that is disposed in the groove-like coolant passage 141b that forms half of the groove-like coolant passage 14 along the circumferential direction, a water jacket spacer that is disposed in part of the groove-like coolant passage 141a or 141b (that forms half of the groove-like coolant passage 14), and corresponds to the cylinder bores 12a1 and 12b1, a water jacket spacer that is disposed in part of the groove-like coolant passage 141a or 141b (that forms half of the groove-like coolant passage 14), and corresponds to the cylinder bores 12b2 and 12a2, a water jacket spacer that is disposed in part of the groove-like coolant passage 141a or 141b (that forms half of the groove-like coolant passage 14), and corresponds to the cylinder bores 12a1, 12b1, and 12b2, a water jacket spacer that is disposed in part of the groove-like coolant passage 141a or 141b (that forms half of the groove-like coolant passage 14), and corresponds to the cylinder bores 12b1, 12b2, and 12a2, a water jacket spacer that is disposed in part of the groove-like coolant passage 141a or 141b (that forms half of the groove-like coolant passage 14), and corresponds to the cylinder bore 12a1, a water jacket spacer that is disposed in part of the groove-like coolant passage 141a or 141b (that forms half of the groove-like coolant passage 14), and corresponds to the cylinder bore 12bl, a water jacket spacer that is disposed in part of the groove-like coolant passage 141a or 141b (that forms half of the groove-like coolant passage 14), and corresponds to the cylinder bore 12b2, a water jacket spacer that is disposed in part of the groove-like coolant passage 141a or 141b (that forms half of the groove-like coolant passage 14), and corresponds to the cylinder bore 12a1, a water jacket spacer that is disposed in the entirety or part of the groove-like coolant passage 141a, and part of the groove-like coolant passage 141b, and the like.

The method for producing a water jacket spacer according to one embodiment of the invention produces the water jacket spacer 1a by subjecting a synthetic resin to an injection molding process. The injection molding process that produces the water jacket spacer 1a utilizes an injection mold that forms a molding space that produces an integrally molded product 10a that includes at least two water jacket spacers 1a, and a bridge 2, the two water jacket spacers 1a being provided so that the inner sides thereof are situated opposite to each other (see FIG. 9).

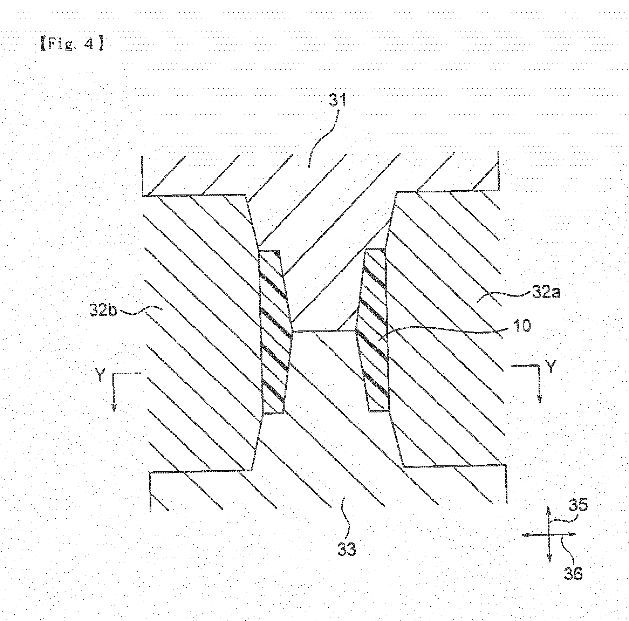

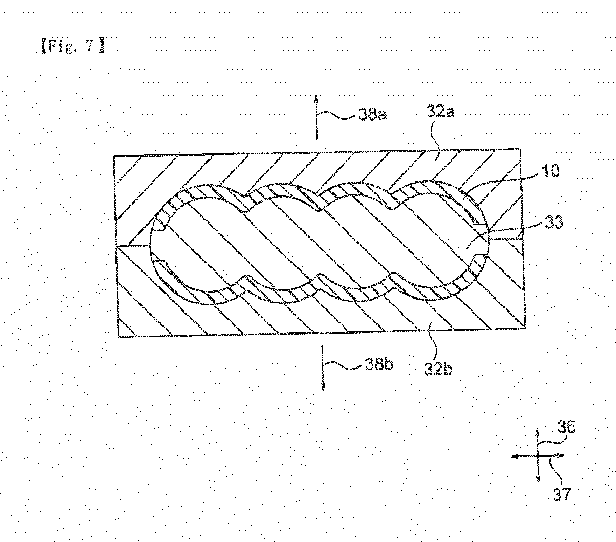

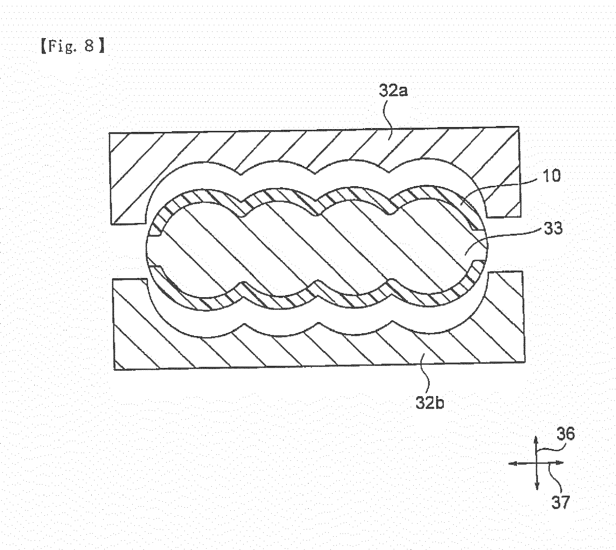

The injection molding process clamps an injection mold 30. As illustrated in FIG. 3, the injection mold 30 includes a stationary mold 31, slide molds (1) 32a and 32b, and a movable mold 33. The injection mold 30 is clamped by a clamping step to form at least a molding space 34 in which the integrally molded product 10a is formed. The stationary mold 31, the slide molds (1) 32a and 32b, and the movable mold 33 are used to mold the integrally molded product 10a. Note that FIGS. 3 to 6 are views illustrating the state of the injection molding process at an end face position (at which a bridge is not formed) taken along a plane that is vertical to the direction in which the cylinder bores are arranged. FIGS. 7 and 8 are end views taken along the line Y-Y illustrated in FIG. 4. FIGS. 3 to 8 are schematic views illustrating the state of the injection molding process that is implemented by the method for producing a water jacket spacer according to one embodiment of the invention. Note that FIGS. 3 to 8 do not illustrate an example in which the molded product 10a illustrated in FIG. 9 is produced by the injection molding process.

As illustrated in FIGS. 4 and 7, the synthetic resin in a molten state is injected into the molding space 34, and cooled and solidified while keeping pressure to form the integrally molded product 10 inside the injection mold 30.

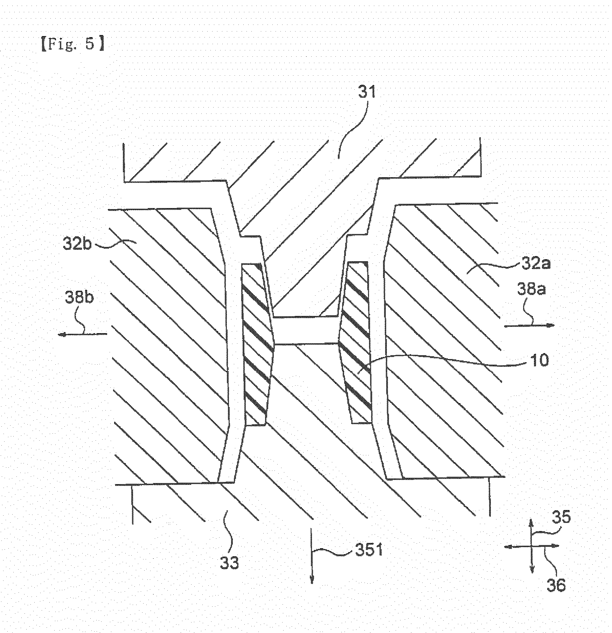

As illustrated in FIGS. 5, 6, and 8, the injection mold 30 is opened. As illustrated in FIGS. 5 and 8, the movable mold 33 is moved in an upward-downward direction 35 with respect to the water jacket spacer (i.e., a direction 351 in which the movable mold 33 moves away from the stationary mold 31), and the slide molds (1) 32a and 32b are moved in a direction (38a, 38b) that is perpendicular to the direction in which the cylinder bores are arranged, and is also perpendicular to the moving direction of the movable mold 33 (i.e., the slide molds (1) 32a and 32b are moved away from the integrally molded product 10). The stationary mold 31 and the slide molds (1) 32a and 32b are thus removed from the integrally molded product 10.

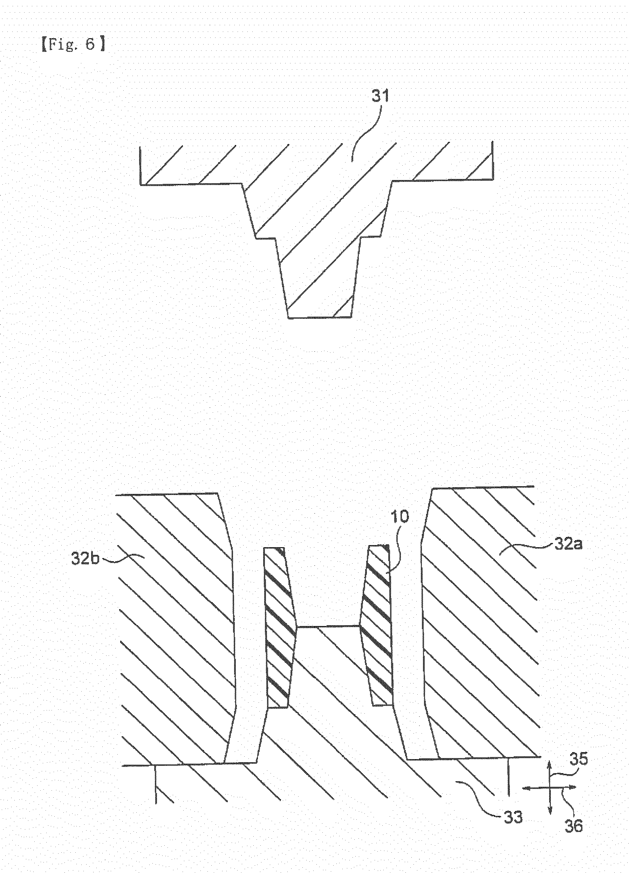

As illustrated in FIG. 6, the movable mold 33 is moved in the upward-downward direction 35 with respect to the water jacket spacer (in which the movable mold 33 moves away from the stationary mold 31) until a position at which the integrally molded product 10 can be removed from the movable mold 33, is reached.

The injection mold 30 is thus opened. After opening the injection mold 30, the integrally molded product 10 that adheres to the movable mold 33 is removed from the movable mold 33 (i.e., the integrally molded product 10 is removed from the injection mold 30).

In FIGS. 4 to 6, the upward-downward direction with respect to the water jacket spacer is indicated by reference numeral 35. In FIGS. 7 and 8, the direction in which the cylinder bores are arranged is indicated by reference numeral 37. In FIGS. 4 to 8, the direction that is perpendicular to the direction in which the cylinder bores are arranged, and is also perpendicular to the moving direction of the movable mold 33, is indicated by reference numeral 36. In FIG. 5, the moving direction of the movable mold 33 during the mold-opening step is indicated by reference numeral 351. The moving direction of the slide mold (1) 32a and the moving direction of the slide mold (1) 32b during the mold-opening step are indicated by reference numeral 38a and 38b, respectively.

As illustrated in FIG. 9, the integrally molded product 10a that is formed inside the injection mold includes at least two water jacket spacers 1a, and the bridge 2, the two water jacket spacers 1a being provided so that the inner sides thereof are situated opposite to each other, and the bridge 2 linking the inner sides of the two water jacket spacers 1a. The bridge 2 included in the integrally molded product 10a includes an inter-bore bridge 2a that links inter-bore parts 3 of the water jacket spacers, and an end bridge 2b that links ends 4 of the water jacket spacers. When producing the integrally molded product 10a using the injection molding process, the molten resin may be injected into the injection mold from the end bridges 2b, for example.

The method for producing a water jacket spacer according to one embodiment of the invention includes subjecting a synthetic resin to an injection molding process to produce a water jacket spacer, the water jacket spacer being disposed in the entirety or part of a groove-like coolant passage along a circumferential direction, the groove-like coolant passage being provided to a cylinder block of an internal combustion engine that has cylinder bores, the injection molding process including a clamping step that clamps an injection mold, an injection step that injects the synthetic resin in a molten state, a solidification step that cools and solidifies the synthetic resin while keeping pressure, a mold-opening step that opens the injection mold, and an ejection step that ejects an integrally molded product from the injection mold, the injection mold including a stationary mold, a movable mold that moves in an upward-downward direction with respect to the water jacket spacer, and at least one slide mold (1) that moves in a direction at an angle of ±15° or less with respect to a direction that is perpendicular to the direction in which the cylinder bores are arranged, and is perpendicular to a moving direction of the movable mold, and forming a molding space when clamped by the clamping step, the molding space producing the integrally molded product that includes at least a first water jacket spacer, a second water jacket spacer, and a bridge, the first water jacket spacer and the second water jacket spacer being provided so that the inner sides thereof are situated opposite to each other, and the bridge linking the inner side or the end of the first water jacket spacer, and the inner side or the end of the second water jacket spacer, and the mold-opening step moving the movable mold in the upward-downward direction with respect to the water jacket spacer, and moving the slide mold (1) in a direction at an angle of ±15° or less with respect to the direction that is perpendicular to the direction in which the cylinder bores are arranged, and is perpendicular to the moving direction of the movable mold, to open the injection mold.

The cylinder block in which the water jacket spacer produced using the method for producing a water jacket spacer according to one embodiment of the invention is disposed, is an open-deck cylinder block in which two or more cylinder bores are formed (arranged) in series. The open-deck cylinder block in which two cylinder bores are formed (arranged) in series, includes two end bores. The open-deck cylinder block in which three or more cylinder bores are formed (arranged) in series, includes two end bores, and one or more intermediate bores. Note that the term "end bore" used herein refers to a cylinder bore among a plurality of cylinder bores arranged in series that is situated on either end, and the term "intermediate bore" used herein refers to a cylinder bore among a plurality of cylinder bores arranged in series that is situated between other cylinder bores among the plurality of cylinder bores.

The water jacket spacer produced using the method for producing a water jacket spacer according to one embodiment of the invention is disposed in part of the groove-like coolant passage provided to the cylinder block along the circumferential direction. Specifically, the water jacket spacer produced using the method for producing a water jacket spacer according to one embodiment of the invention has a shape formed by one arc, or has a shape formed by two or more arcs that are linked to each other (when viewed from above). The number of arcs included in the water jacket spacer produced using the method for producing a water jacket spacer according to one embodiment of the invention (when viewed from above), and the shape of the water jacket spacer produced using the method for producing a water jacket spacer according to one embodiment of the invention (when viewed from above), are appropriately selected taking account of the number of cylinder bores formed in the cylinder block, an area for which it is desired to change the flow of the coolant, and the like. The molding space within the injection mold that is used to mold the integrally molded product is designed taking account of the desired shape of the water jacket spacer.

The method for producing a water jacket spacer according to one embodiment of the invention produces the water jacket spacer by subjecting the synthetic resin to the injection molding process. The injection molding process includes a clamping step that clamps the injection mold, an injection step that injects the synthetic resin in a molten state into the molding space, a solidification step that cools and solidifies the synthetic resin injected into the molding space while keeping pressure, a mold-opening step that opens the injection mold, and an ejection step that ejects the integrally molded product from the injection mold.

The injection mold that is used for the injection molding process that is implemented by the method for producing a water jacket spacer according to one embodiment of the invention is designed so that the molding space that is used to mold the integrally molded product is formed in the injection mold when the injection mold is clamped by the clamping step.

The injection mold that is used for the injection molding process that is implemented by the method for producing a water jacket spacer according to one embodiment of the invention includes the stationary mold, the movable mold that moves in the upward-downward direction with respect to the water jacket spacer so as to move away from the stationary mold, and one or two or more slide molds (1) that move in a direction at an angle of ±15° or less with respect to a direction that is perpendicular to the direction in which the cylinder bores are arranged, and is perpendicular to the moving direction of the movable mold. Note that the inner side of the water jacket spacer refers to the side of the water jacket spacer that is situated opposite to the cylinder bore-side wall surface of the groove-like coolant passage, and the outer side of the water jacket spacer refers to the side of the water jacket spacer that is situated opposite to the wall surface of the groove-like coolant passage that is situated opposite to the cylinder bore-side wall surface. The slide mold that moves in a direction at an angle of ±15° or less with respect to a direction that is perpendicular to the direction in which the cylinder bores are arranged, and is perpendicular to the moving direction of the movable mold, is referred to as "slide mold (1)".

The slide mold (1) is used to form a part that is undercut with respect to the moving direction of the movable mold, and is not undercut with respect to the moving direction of the slide mold (1) that moves in a direction at an angle of ±15° or less with respect to a direction that is perpendicular to the direction in which the cylinder bores are arranged, and is perpendicular to the moving direction of the movable mold, on the outer side of the first water jacket spacer or the second water jacket spacer that forms the integrally molded product.

The injection mold that is used to produce the integrally molded product includes the stationary mold, the movable mold that moves in the upward-downward direction with respect to the water jacket spacer so as to move away from the stationary mold, and at least one slide mold (1) that moves in a direction at an angle of ±15° or less with respect to a direction that is perpendicular to the direction in which the cylinder bores are arranged, and is perpendicular to the moving direction of the movable mold, and may optionally include a slide mold that moves in a direction at an angle of ±15° or less with respect to a direction that is perpendicular to the direction in which the cylinder bores are arranged, and is perpendicular to the moving direction of the movable mold (hereinafter may be referred to as "slide mold (2)"), a slide mold that moves in a direction at an angle of less than 90° with respect to the direction in which the cylinder bores are arranged, and an angle of ±15° or less with respect to a direction that is perpendicular to the moving direction of the movable mold (hereinafter may be referred to as "slide mold (3)"), and the like.

FIGS. 7 and 8 illustrate an example in which the injection mold that is used to produce the integrally molded product includes the stationary mold, the movable mold that moves in the upward-downward direction with respect to the water jacket spacer, and two slide molds (1) that move in a direction at an angle of ±15° or less with respect to a direction that is perpendicular to the direction in which the cylinder bores are arranged, and is perpendicular to the moving direction of the movable mold.

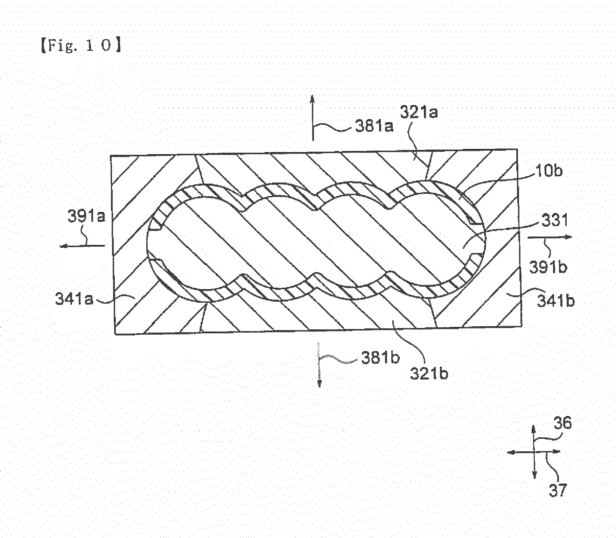

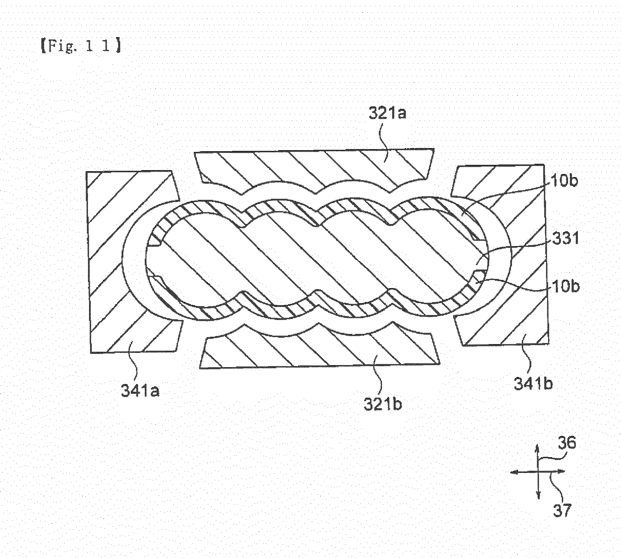

FIGS. 10 and 11 illustrate an example in which the injection mold that is used to produce the integrally molded product includes the stationary mold (not illustrated in the drawings), a movable mold 331, slide molds (1) 321a and 321b, and slide molds (2) 341a and 341b. In the mold-opening step, the movable mold 331 moves in the upward-downward direction with respect to the water jacket spacer (i.e., a direction perpendicular to the sheet in the example illustrated in FIGS. 10 and 11), the slide molds (1) 321a and 321b move in a direction at an angle of ±15° or less with respect to a direction that is perpendicular to the direction in which the cylinder bores are arranged, and is perpendicular to the moving direction of the movable mold (i.e., move in directions 381a and 381b in which the slide molds (1) 321a and 321b move away from an integrally molded product 10b), and the slide molds (2) 341a and 341b move in a direction at an angle of ±15° or less with respect to the direction in which the cylinder bores are arranged, and a direction that is perpendicular to the moving direction of the movable mold (i.e., move in directions 391a and 391b in which the slide molds (2) 341a and 341b move away from the integrally molded product 10b). The slide mold (2) is used to form a part that is undercut with respect to the movable mold, is undercut with respect to the slide mold (1) that moves in a direction at an angle of ±15° or less with respect to a direction that is perpendicular to the direction in which the cylinder bores are arranged, and is perpendicular to the moving direction of the movable mold, and is not undercut with respect to the slide mold (2) that moves in a direction at an angle of ±15° or less with respect to the direction in which the cylinder bores are arranged, and a direction that is perpendicular to the moving direction of the movable mold, on the outer side of the first water jacket spacer or the second water jacket spacer that forms the integrally molded product. Specifically, the injection mold that is used to produce the integrally molded product may include the stationary mold, the movable mold that moves in the upward-downward direction with respect to the water jacket spacer, two slide molds (1) that move in a direction at an angle of ±15° or less with respect to a direction that is perpendicular to the direction in which the cylinder bores are arranged, and is perpendicular to the moving direction of the movable mold, and two slide molds (2) that move in a direction at an angle of ±15° or less with respect to the direction in which the cylinder bores are arranged, and a direction that is perpendicular to the moving direction of the movable mold.

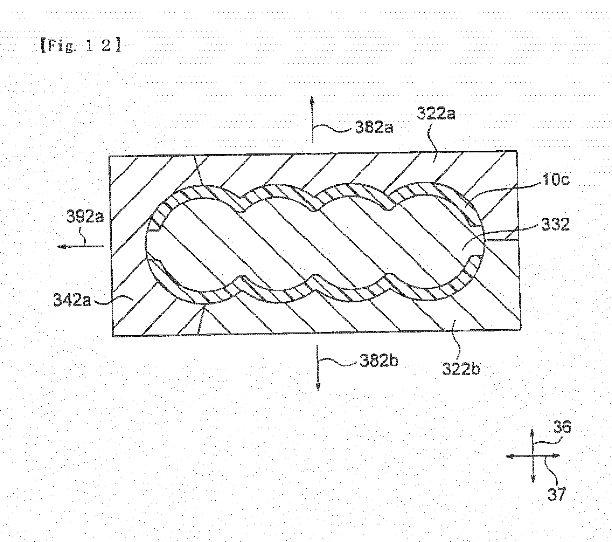

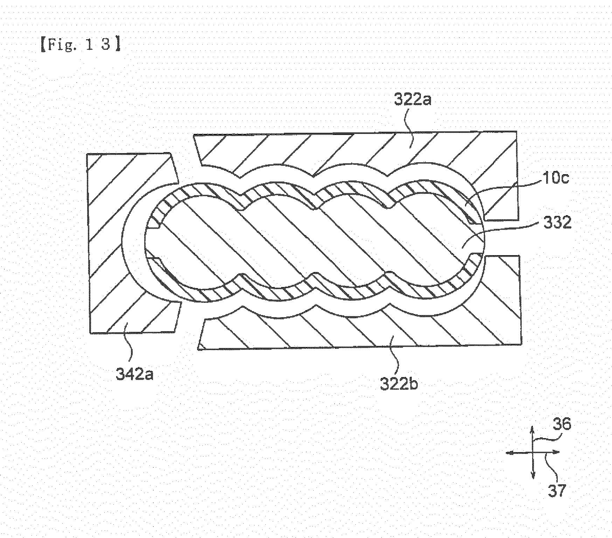

FIGS. 12 and 13 illustrate an example in which the injection mold that is used to produce the integrally molded product includes the stationary mold (not illustrated in the drawings), a movable mold 332, slide molds (1) 322a and 322b, and a slide mold (2) 342a. In the mold-opening step, the movable mold 332 moves in the upward-downward direction with respect to the water jacket spacer (i.e., a direction perpendicular to the sheet in the example illustrated in FIGS. 12 and 13), the slide molds (1) 322a and 322b move in a direction at an angle of ±15° or less with respect to a direction that is perpendicular to the direction in which the cylinder bores are arranged, and is perpendicular to the moving direction of the movable mold (i.e., move in directions 382a and 382b in which the slide molds (1) 322a and 322b move away from an integrally molded product 10c), and the slide mold (2) 342a moves in a direction at an angle of ±15° or less with respect to the direction in which the cylinder bores are arranged, and a direction that is perpendicular to the moving direction of the movable mold (i.e., move in a directions 392a in which the slide mold (2) 342a moves away from the integrally molded product 10c). Specifically, the injection mold that is used to produce the integrally molded product may include the stationary mold, the movable mold that moves in the upward-downward direction with respect to the water jacket spacer, two slide molds (1) that move in a direction at an angle of ±15° or less with respect to a direction that is perpendicular to the direction in which the cylinder bores are arranged, and is perpendicular to the moving direction of the movable mold, and one slide mold (2) that moves in a direction at an angle of ± 15° or less with respect to the direction in which the cylinder bores are arranged, and a direction that is perpendicular to the moving direction of the movable mold.

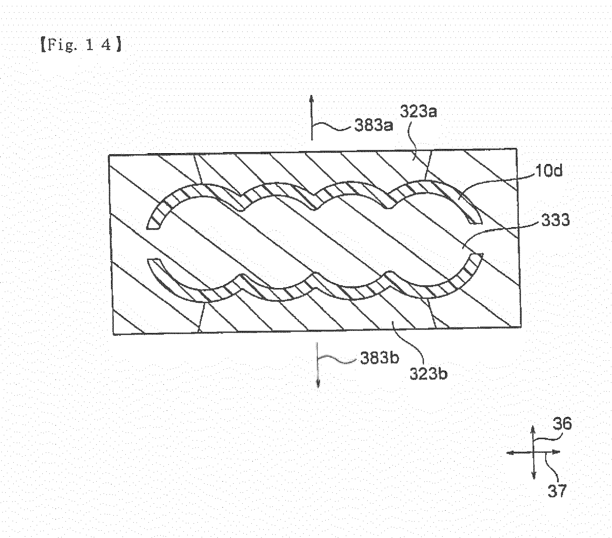

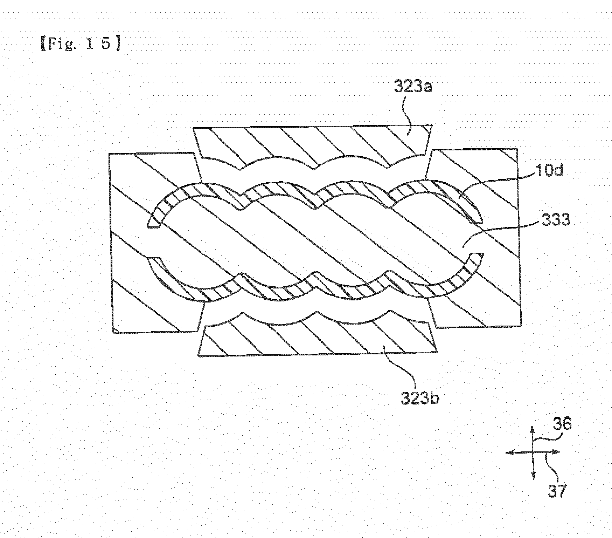

FIGS. 14 and 15 illustrate an example in which the injection mold that is used to produce the integrally molded product includes the stationary mold (not illustrated in the drawings), a movable mold 333, and slide molds (1) 323a and 323b. In the mold-opening step, the movable mold 333 moves in the upward-downward direction with respect to the water jacket spacer (i.e., a direction perpendicular to the sheet in the example illustrated in FIGS. 14 and 15), and the slide molds (1) 323a and 323b move in a direction at an angle of ±15° or less with respect to a direction that is perpendicular to the direction in which the cylinder bores are arranged, and is perpendicular to the moving direction of the movable mold (i.e., move in directions 383a and 383b in which the slide molds (1) 323a and 323b move away from an integrally molded product 10d). In the example illustrated in FIGS. 14 and 15, the movable mold is situated on the inner side and the outer side of the water jacket spacer. When a part that is undercut with respect to the movable mold is not provided on the outer side of the water jacket spacer, the movable mold that is situated on the inner side and the outer side of the water jacket spacer may be used. Specifically, the injection mold that is used to produce the integrally molded product may include the stationary mold, the movable mold that moves in the upward-downward direction with respect to the water jacket spacer, and two slide molds (1) that move in a direction at an angle of ±15° or less with respect to a direction that is perpendicular to the direction in which the cylinder bores are arranged, and is perpendicular to the moving direction of the movable mold, and the movable mold may be situated on the inner side and the outer side of the water jacket spacer.

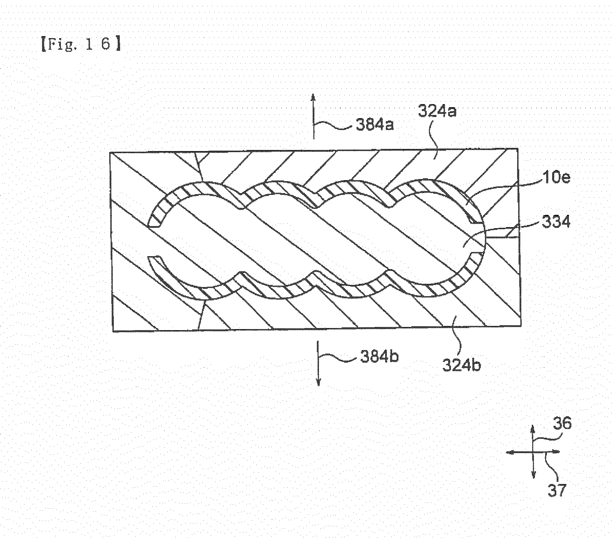

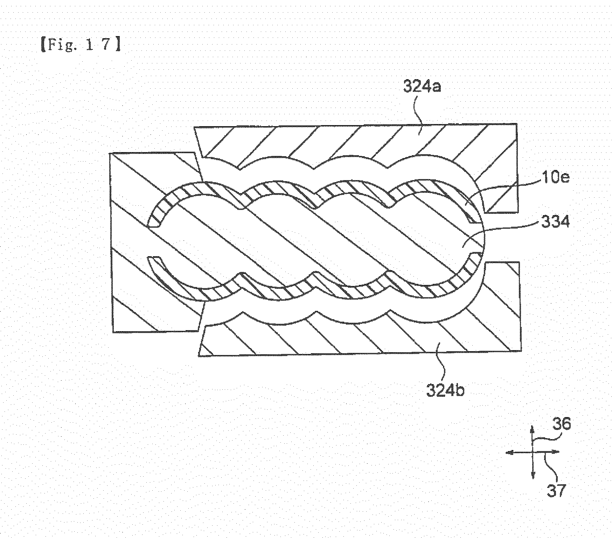

FIGS. 16 and 17 illustrate an example in which the injection mold that is used to produce the integrally molded product includes the stationary mold (not illustrated in the drawings), a movable mold 334, and slide molds (1) 324a and 324b. In the mold-opening step, the movable mold 334 moves in the upward-downward direction with respect to the water jacket spacer (i.e., a direction perpendicular to the sheet in the example illustrated in FIGS. 16 and 17), and the slide molds (1) 324a and 324b move in a direction at an angle of ±15° or less with respect to a direction that is perpendicular to the direction in which the cylinder bores are arranged, and is perpendicular to the moving direction of the movable mold (i.e., move in directions 384a and 384b in which the slide molds (1) 324a and 324b move away from an integrally molded product 10e). In the example illustrated in FIGS. 16 and 17, the movable mold 334 is situated on the inner side and the outer side of the water jacket spacer. Specifically, the injection mold that is used to produce the integrally molded product may include the stationary mold, the movable mold that moves in the upward-downward direction with respect to the water jacket spacer, and two slide molds (1) that move in a direction at an angle of ±15° or less with respect to a direction that is perpendicular to the direction in which the cylinder bores are arranged, and is perpendicular to the moving direction of the movable mold, and the movable mold may be situated on the inner side and the outer side of the water jacket spacer.

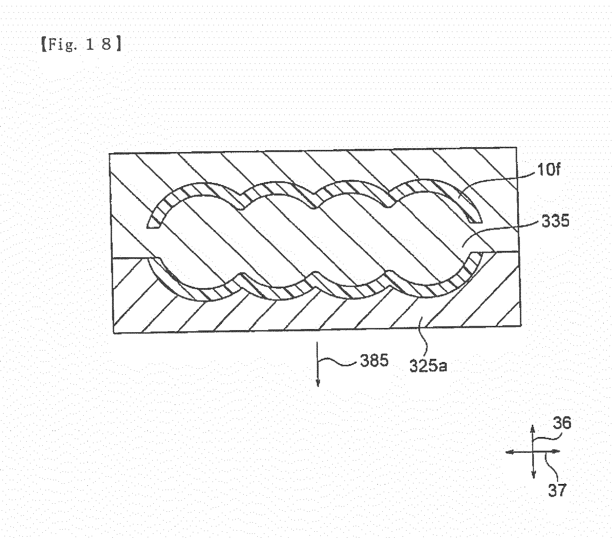

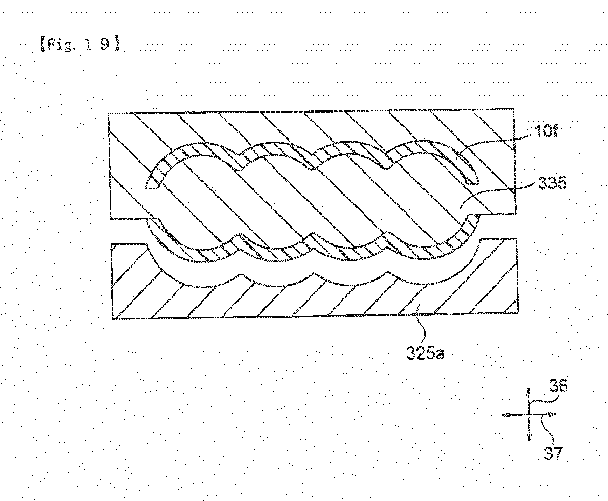

FIGS. 18 and 19 illustrate an example in which the injection mold that is used to produce the integrally molded product includes the stationary mold (not illustrated in the drawings), a movable mold 335, and a slide mold (1) 325a. In the mold-opening step, the movable mold 335 moves in the upward-downward direction with respect to the water jacket spacer (i.e., a direction perpendicular to the sheet in the example illustrated in FIGS. 18 and 19), and the slide mold (1) 325a moves in a direction at an angle of ±15° or less with respect to a direction that is perpendicular to the direction in which the cylinder bores are arranged, and is perpendicular to the moving direction of the movable mold (i.e., move in a direction 385 in which the slide mold (1) 325a moves away from an integrally molded product 10f). In the example illustrated in FIGS. 18 and 19, the movable mold 335 is situated on the inner side and the outer side of the water jacket spacer (the inner side of the water jacket spacers, and the outer side of one of the water jacket spacers). When a part that is undercut with respect to the movable mold is not provided on the outer side of one of the water jacket spacers, the movable mold that is situated on the inner side and the outer side of the water jacket spacer may be used. In this case, one slide mold (1) can be used with respect to the water jacket spacer for which a part that is undercut with respect to the movable mold, and is not undercut with respect to the slide mold (1) that moves in a direction at an angle of ±15° or less with respect to a direction that is perpendicular to the direction in which the cylinder bores are arranged, and is perpendicular to the moving direction of the movable mold, is formed. Specifically, the injection mold that is used to produce the integrally molded product may include the stationary mold, the movable mold that moves in the upward-downward direction with respect to the water jacket spacer, and one slide mold (1) that moves in a direction at an angle of ±15° or less with respect to a direction that is perpendicular to the direction in which the cylinder bores are arranged, and is perpendicular to the moving direction of the movable mold, and the movable mold may be situated on the inner side and the outer side of the water jacket spacer.

In the examples illustrated in FIGS. 14 to 17, the movable mold is situated on the outer side of the water jacket spacer. In the examples illustrated in FIGS. 14 to 17, an adhesion-to-slide phenomenon in which the water jacket spacer adheres to the slide mold (1) and moves together with the slide moid (1) does not occur, but a member that is formed outside the water jacket spacer adheres to the slide mold (1), and is strongly pulled by the slide mold (I). In FIGS. 10 to 19, the direction in which the cylinder bores are arranged is indicated by reference numeral 37, and a direction that is perpendicular to the direction in which the cylinder bores are arranged, and is also perpendicular to the moving direction of the movable mold is indicated by reference numeral 36.

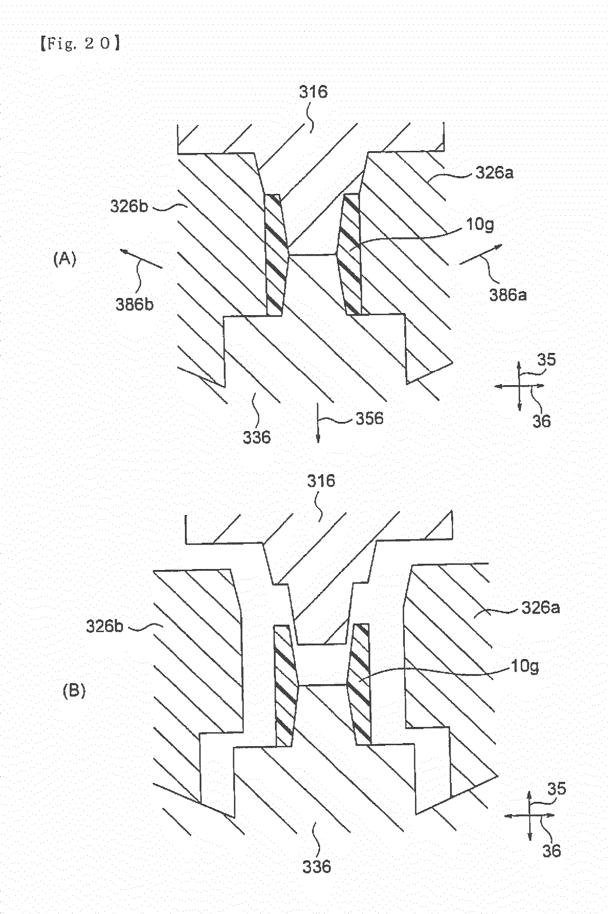

FIG. 20 illustrates an example in which the injection mold that is used to produce the integrally molded product includes a stationary mold 316, a movable mold 336, and slide molds (1) 326a and 326b. In the mold-opening step, the movable mold 336 moves in the upward-downward direction 35 with respect to the water jacket spacer, and the slide mold (1) 326a and 326b move in a direction at an angle of ±15° or less with respect to a direction that is perpendicular to the direction in which the cylinder bores are arranged, and is perpendicular to the moving direction of the movable mold (i.e., move in directions 386a and 386b in which the slide molds (1) 326a and 326b move away from an integrally molded product 10g). In the example illustrated in FIG. 20, the slide mold (1) moves in a direction at an angle of ±15° or less with respect to a direction that is perpendicular to the moving direction of the movable mold, instead of moving in a direction perpendicular to the moving direction of the movable mold.

As described above, the injection mold that is used for the injection molding process that is implemented by the method for producing a water jacket spacer according to one embodiment of the invention includes the stationary mold, the movable mold that moves in the upward-downward direction with respect to the water jacket spacer, and at least one slide mold (1) that moves in a direction at an angle of ±15° or less with respect to a direction that is perpendicular to the direction in which the cylinder bores are arranged, and is perpendicular to the moving direction of the movable mold. A part of the first water jacket spacer and the second water jacket spacer that form the integrally molded product that is molded using the stationary mold and the movable mold is appropriately selected taking account of the first water jacket spacer and the second water jacket spacer that form the integrally molded product (i.e., a part of the first water jacket spacer and the second water jacket spacer that is undercut with respect to the stationary mold or the movable mold is formed). The injection mold that is used for the injection molding process that is implemented by the method for producing a water jacket spacer according to one embodiment of the invention preferably includes one or two slide molds (1) (particularly preferably two slide molds (1)). The number of slide molds (1) is appropriately selected taking account of the first water jacket spacer and the second water jacket spacer that form the integrally molded product (i.e., a part of the first water jacket spacer and the second water jacket spacer that is undercut with respect to the movable mold, and is not undercut with respect to the slide mold (1)). The injection mold that is used for the injection molding process that is implemented by the method for producing a water jacket spacer according to one embodiment of the invention may optionally include, in addition to the stationary mold, the movable mold, and the slide mold (1), the slide mold (2) that moves in a direction at an angle of ±15° or less with respect to the direction in which the cylinder bores are arranged, and a direction that is perpendicular to the moving direction of the movable mold, the slide mold (3) that moves in a direction at an angle of less than 90° with respect to the direction in which the cylinder bores are arranged, and an angle of ±15° or less with respect to a direction that is perpendicular to the moving direction of the movable mold, and the like. Whether or not to provide the slide mold (1) and the slide mold (3) to the injection mold, and a part of the first water jacket spacer and the second water jacket spacer that form the integrally molded product that is molded using the slide mold (1) and the slide mold (3), are appropriately selected taking account of the first water jacket spacer and the second water jacket spacer that form the integrally molded product (i.e., whether or not to provide the first water jacket spacer and the second water jacket spacer with a part that is undercut with respect to the movable mold, is undercut with respect to the slide mold (1), and is not undercut with respect to the slide mold (1) or the slide mold (3), and an area in which such a part is formed).

The slide mold (1) that is included in the injection mold that is used for the injection molding process that is implemented by the method for producing a water jacket spacer according to one embodiment of the invention moves in a direction at an angle of ±15° or less with respect to a direction that is perpendicular to the direction in which the cylinder bores are arranged, and is perpendicular to the moving direction of the movable mold. Specifically, the slide mold (1) may move in a direction that is perpendicular to the direction in which the cylinder bores are arranged, and is perpendicular to the moving direction of the movable mold, or may move in a direction at an angle of ±15° or less with respect to a direction that is perpendicular to the direction in which the cylinder bores are arranged, and is perpendicular to the moving direction of the movable mold.

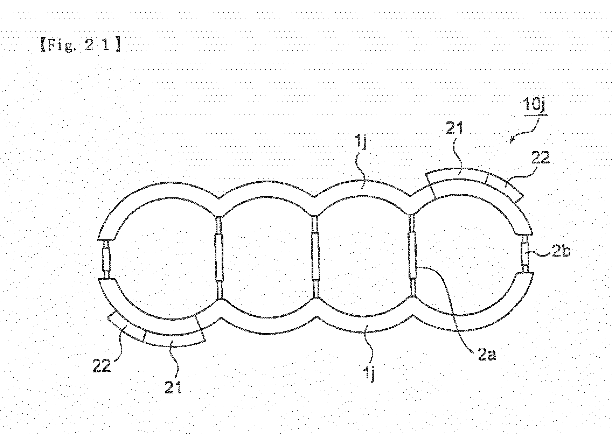

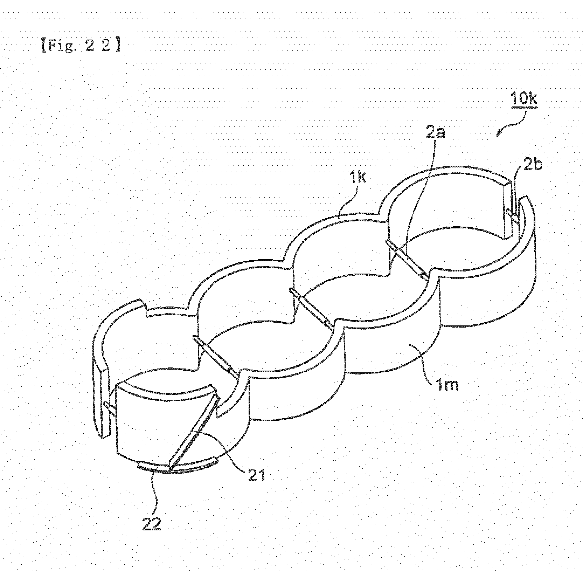

Although FIG. 9 illustrates an example in which an additional member is not formed outside the water jacket spacer 1a for convenience of explanation with respect to the integrally molded product, a part that is undercut with respect to the movable mold is formed on the outer side of the actual water jacket spacer (see water jacket spacers 1j, 1k, and 1m illustrated in FIGS. 21 and 22). Although FIGS. 3 to 8 and FIGS. 10 to 20 illustrate an example in which a part that is undercut with respect to the movable mold is not formed on the outer side of the water jacket spacer for convenience of explanation, a part that is undercut with respect to the movable mold is formed on the outer side of the actual water jacket spacer. Therefore, the injection molding process cannot be implemented using only the stationary mold and the movable mold, and it is necessary to use the slide mold (1), or the slide mold (1) and the slide mold (2) or (3), for example.

In the clamping step, the injection mold is clamped to form the molding space for molding the integrally molded product in the injection mold. In the injection step, the synthetic resin in a molten state is injected into the molding space formed in the injection mold to fill the molding space with the synthetic resin. In the solidification step, the synthetic resin that has been injected into the molding space in the injection step is cooled and solidified while keeping pressure to form the integrally molded product in the molding space formed in the injection mold.

In the mold-opening step, the injection mold is opened. In the mold-opening step, the movable mold is moved in the upward-downward direction with respect to the water jacket spacer so as to move away from the stationary mold, and the slide mold (1) is moved in a direction at an angle of ±15° or less with respect to a direction that is perpendicular to the direction in which the cylinder bores are arranged, and is perpendicular to the moving direction of the movable mold so as to move away from the integrally molded product. The stationary mold and the slide mold (1) are thus removed from the integrally molded product. The movable mold is moved in the upward-downward direction with respect to the water jacket spacer (in which the movable mold moves away from the stationary mold) until a position at which the integrally molded product can be removed from the movable mold, is reached. The injection mold is thus opened.

In the ejection step, the integrally molded product that adheres to the stationary mold is removed from the stationary mold after performing the mold-opening step to eject the integrally molded product from the injection mold.

The molding space that is formed in the injection mold by the clamping step has a shape such that the integrally molded product described below is formed. Specifically, the method for producing a water jacket spacer according to one embodiment of the invention utilizes the injection mold in which the molding space is formed by the clamping step so as to have a shape such that the integrally molded product described below is formed.

The integrally molded product that is formed in the injection mold by implementing the method for producing a water jacket spacer according to one embodiment of the invention includes at least the first water jacket spacer, the second water jacket spacer, and the bridge that links the inner side or the end of the first water jacket spacer, and the inner side or the end of the second water jacket spacer. The first water jacket spacer and the second water jacket spacer may be provided with an insulation rubber member and an additional member (on the inner side), and disposed in the groove-like coolant passage, or may be disposed in the groove-like coolant passage without being provided with an insulation rubber member and the like (on the inner side).

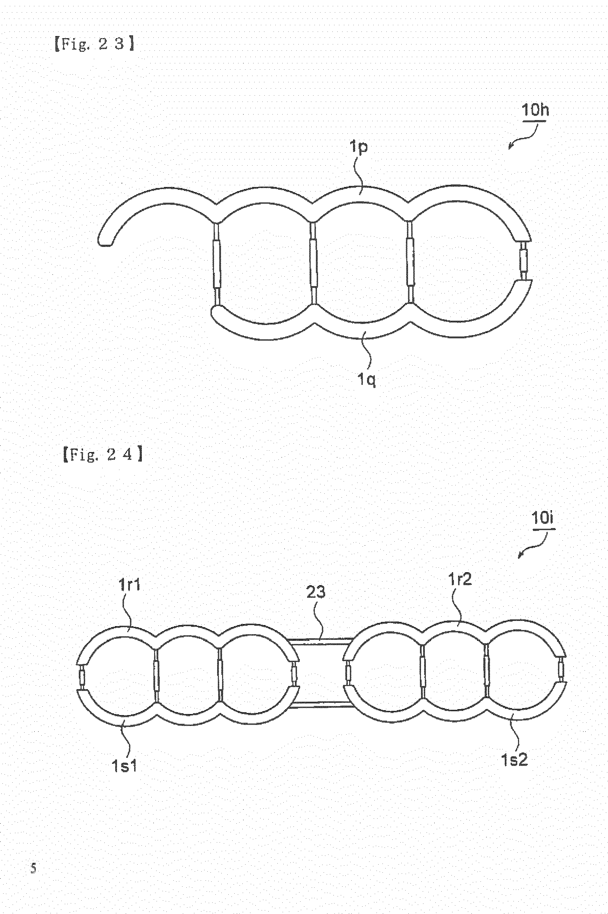

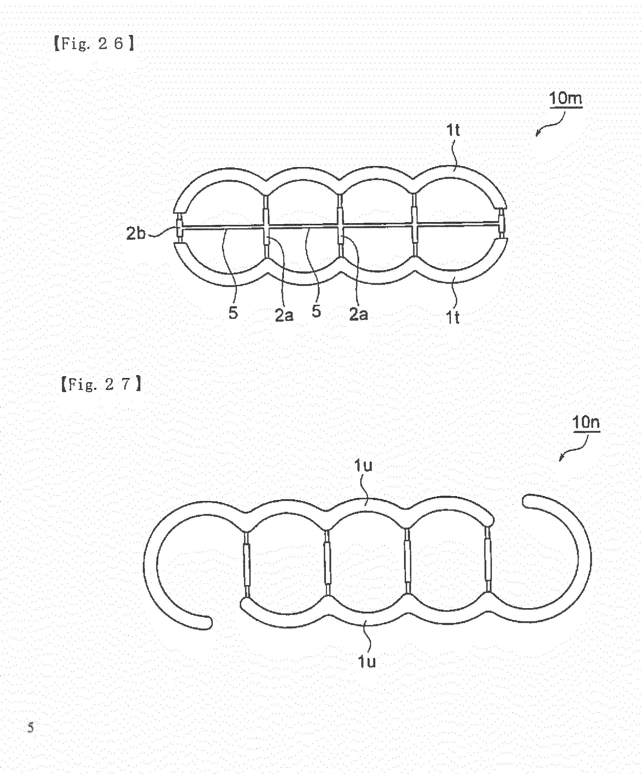

The first water jacket spacer and the second water jacket spacer that form the integrally molded product may be identical to or different from each other as to the shape. The first water jacket spacer and the second water jacket spacer that form the integrally molded product may be disposed in the groove-like coolant passage provided to an identical cylinder block, or may be disposed in the groove-like coolant passage provided to a different cylinder block. In the example illustrated in FIG. 21, an integrally molded product 10j includes two water jacket spacers 1j having an identical shape. The two water jacket spacers 1j included in the integrally molded product 10j are disposed in the groove-like coolant passage provided to a different cylinder block. In the example illustrated in FIG. 22, an integrally molded product 10k includes water jacket spacers 1k and 1m having a different shape. The integrally molded product 10k includes the water jacket spacer 1k that is disposed in half of the groove-like coolant passage provided to the cylinder block, and the water jacket spacer 1m that is disposed in the other half of the groove-like coolant passage provided to the cylinder block. In the example illustrated in FIG. 23, an integrally molded product 10h includes water jacket spacers 1p and 1q that differ in the number of bore-covering parts. The number of bore-covering parts of the water jacket spacer 1p is 4, and the number of bore-covering parts of the water jacket spacer 1q is 3. In the example illustrated in FIG. 27, an integrally molded product 10n includes two water jacket spacers 1u that are disposed in half of the groove-like coolant passage, and also disposed in part of the other half of the groove-like coolant passage. The water jacket spacers 1u illustrated in FIG. 27 are disposed in half of the groove-like coolant passage, and also disposed in part of the other half of the groove-like coolant passage.

The integrally molded product includes one or more pairs of first water jacket spacer and second water jacket spacer. When the number of bore-covering parts of the first water jacket spacer and the second water jacket spacer that form the integrally molded product is large, a very large injection mold is required when the integrally molded product that includes two or more pairs of first water jacket spacer and second water jacket spacer is formed. In such a case, it is preferable that the integrally molded product include one pair of first water jacket spacer and second water jacket spacer. When the number of bore-covering parts of the first water jacket spacer and the second water jacket spacer that form the integrally molded product is small, a large injection mold is not required even when the integrally molded product that includes two or more pairs of first water jacket spacer and second water jacket spacer is formed. The production efficiency increases as the number of pairs of first water jacket spacer and second water jacket spacer included in the integrally molded product increases. Therefore, it is preferable that the integrally molded product include two or more pairs of first water jacket spacer and second water jacket spacer when the number of bore-covering parts of the first water jacket spacer and the second water jacket spacer that form the integrally molded product is small. In the example illustrated in FIG. 24, an integrally molded product 10i includes first water jacket spacers 1r1 and 1r2, and second water jacket spacers 1s1 and 1s2. The first water jacket spacers 1r1 and 1r2 are linked through a link 23, and the second water jacket spacers 1s1 and 1s2 are linked through a link 23. Specifically, the integrally molded product includes two pairs of first water jacket spacer and second water jacket spacer.

The first water jacket spacer and the second water jacket spacer that form the integrally molded product have a shape such that the first water jacket spacer and the second water jacket spacer are disposed in part of the groove-like coolant passage. The water jacket spacer may have a shape such that the water jacket spacer is disposed in half of the groove-like coolant passage (e.g., the water jacket spacer 1a illustrated in FIG. 2), or may have a shape such that the water jacket spacer is disposed in part of half of the groove-like coolant passage (e.g., the water jacket spacer 1b illustrated in FIG. 2), or may have a shape such that the water jacket spacer is disposed in half of the groove-like coolant passage, and part of the other half of the groove-like coolant passage (e.g., the water jacket spacer 1u illustrated in FIG. 27), or may have a shape such that the water jacket spacer is disposed in part of half of the groove-like coolant passage, and part of the other half of the groove-like coolant passage. The first water jacket spacer and the second water jacket spacer that form the integrally molded product may have a shape formed by one arc, or may have a shape formed by two or more arcs that are linked to each other (when viewed from above).

The first water jacket spacer and the second water jacket spacer that form the integrally molded product may include a coolant flow change member 21 that changes the flow of the coolant so that the coolant supplied to the lower part of the groove-like coolant passage flows through the upper part of the groove-like coolant passage, a coolant flow prevention member 22 that prevents a situation in which the coolant supplied to the lower part of the groove-like coolant passage flows from the lower side of the water jacket spacer into the inner side of the water jacket spacer, and the like. The first water jacket spacer and the second water jacket spacer that form the integrally molded product may include a member that prevents upward displacement, such as a cylinder head contact member that is provided on the water jacket spacers, and comes in contact with a cylinder head or a cylinder head gasket. The first water jacket spacer and the second water jacket spacer that form the integrally molded product may also include a member that adjusts the flow of the coolant.

An adhesion-to-slide phenomenon can be prevented by providing one bridge to the integrally molded product so that the inner side or the end of the first water jacket spacer, and the inner side or the end of the second water jacket spacer are linked through the bridge.

The position of the integrally molded product at which the bridge is formed is not particularly limited as long as an adhesion-to-slide phenomenon can be prevented. The bridge may be formed at a position at which the end of the first water jacket spacer and the end of the second water jacket spacer are linked, or may be formed at a position at which the inner side of the inter-bore part of the first water jacket spacer and the inner side of the inter-bore part of the second water jacket spacer are linked, or may be formed at a position at which the inner side of the bore-covering part of the first water jacket spacer and the inner side of the bore-covering part of the second water jacket spacer are linked, or may be formed at a position at which the inner side of the inter-bore part of the first water jacket spacer and the inner side of the bore-covering part of the second water jacket spacer are linked. Note that the inter-bore part of the water jacket spacer refers to a part of the water jacket spacer that is situated opposite to the inter-bore boundary of the cylinder bore-side wall surface of the groove-like coolant passage, and the vicinity thereof. Since the cylinder bore-side wall surface of the groove-like coolant passage that corresponds to the side of the inter-bore wall corresponds to the inter-bore boundary of the cylinder bore-side wall surface of the groove-like coolant passage, and the vicinity thereof, a part of the water jacket spacer that is situated opposite to the inter-bore boundary of the cylinder bore-side wall surface of the groove-like coolant passage, and the vicinity thereof, is referred to as the inter-bore part of the water jacket spacer. In the example illustrated in FIG. 9, the inter-bore part of the water jacket spacer is indicated by reference numeral 3. The bore-covering part of the water jacket spacer refers to a part of the water jacket spacer that is situated opposite to the bore-covering part of the cylinder bore-side wall surface of the groove-like coolant passage, and is in the shape of an arc when viewed from above. In the example illustrated in FIG. 9, the bore-covering part of the water jacket spacer is indicated by reference numeral 8.

When the number of bore-covering parts of the first water jacket spacer is equal to the number of bore-covering parts of the second water jacket spacer (case (I)), the bridge may be formed at the positions described below with respect to the integrally molded product (see (i) to (iv)).
(i) The bridge may be formed at a position at which one end of the first water jacket spacer and one end of the second water jacket spacer are linked, and a position at which the other end of the first water jacket spacer and the other end of the second water jacket spacer are linked.
(ii) The bridge may be formed at one position at which the inner side of the inter-bore part of the first water jacket spacer and the inner side of the inter-bore part of the second water jacket spacer are linked.
(iii) The bridge may be formed at two or more positions at which the inner side of the inter-bore part of the first water jacket spacer and the inner side of the inter-bore part of the second water jacket spacer are linked.
(iv) The bridge may be formed at a position at which one end of the first water jacket spacer and one end of the second water jacket spacer are linked, a position at which the other end of the first water jacket spacer and the other end of the second water jacket spacer are linked, and one or more positions at which the inner side of the inter-bore part of the first water jacket spacer and the inner side of the inter-bore part of the second water jacket spacer are linked.

When the number of bore-covering parts of the first water jacket spacer differs from the number of bore-covering parts of the second water jacket spacer (case (II)), the bridge may be formed at the positions described below with respect to the integrally molded product (see (i) to (iv)).
(i) The bridge may be formed at a position at which one end of the first water jacket spacer or the second water jacket spacer, whichever is smaller with respect to the number of bore-covering parts, and one end of the first water jacket spacer or the second water jacket spacer, whichever is larger with respect to the number of bore-covering parts, are linked, and a position at which the other end of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts, are linked.
(ii) The bridge may be formed at a position at which the inner side of the inter-bore part of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts, are linked.
(iii) The bridge may be formed at two or more positions at which the inner side of the inter-bore part of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts, are linked.
(iv) The bridge may be formed at a position at which one end of the first water jacket spacer or the second water jacket spacer, whichever is smaller with respect to the number of bore-covering parts, and one end of the first water jacket spacer or the second water jacket spacer, whichever is larger with respect to the number of bore-covering parts, are linked, a position at which the other end of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts, are linked, and one or more positions at which the inner side of the inter-bore part of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts, are linked.

In the example (i) that falls under the case (1), the integrally molded product includes an end bridge that links one end of the first water jacket spacer and one end of the second water jacket spacer, and an end bridge that links the other end of the first water jacket spacer and the other end of the second water jacket spacer. In the example (ii) that falls under the case (1), the integrally molded product includes one inter-bore bridge that links the inner side of the inter-bore part of the first water jacket spacer and the inner side of the inter-bore part of the second water jacket spacer. In the example (iii) that falls under the case (1), the integrally molded product includes two or more inter-bore bridges that link the inner side of the inter-bore part of the first water jacket spacer and the inner side of the inter-bore part of the second water jacket spacer. In the example (iv) that falls under the case (I), the integrally molded product includes an end bridge that links one end of the first water jacket spacer and one end of the second water jacket spacer, an end bridge that links the other end of the first water jacket spacer and the other end of the second water jacket spacer, and one or more inter-bore bridges that link the inner side of the inter-bore part of the first water jacket spacer and the inner side of the inter-bore part of the second water jacket spacer.

In the example (i) that falls under the case (II), the integrally molded product includes an end bridge that links one end of the first water jacket spacer or the second water jacket spacer, whichever is smaller with respect to the number of bore-covering parts, and one end of the first water jacket spacer or the second water jacket spacer, whichever is larger with respect to the number of bore-covering parts, and an inter-bore bridge that links the other end of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts. In the example (ii) that falls under the case (II), the integrally molded product includes one inter-bore bridge that links the inner side of the inter-bore part of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts. In the example (iii) that falls under the case (II), the integrally molded product includes two or more inter-bore bridges that link the inner side of the inter-bore part of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts. In the example (iv) that falls under the case (II), the integrally molded product includes an end bridge that links one end of the first water jacket spacer or the second water jacket spacer, whichever is smaller with respect to the number of bore-covering parts, and one end of the first water jacket spacer or the second water jacket spacer, whichever is larger with respect to the number of bore-covering parts, an inter-bore bridge that links the other end of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts, and one or more inter-bore bridges that link the inner side of the inter-bore part of the first water jacket spacer or the second water jacket spacer, whichever is smaller with respect to the number of bore-covering parts, and the inner side of the inter-bore part of the first water jacket spacer or the second water jacket spacer, whichever is larger with respect to the number of bore-covering parts.

The integrally molded product may include a bridge that links an arc-shaped center area of the inner side of the bore-covering part of the first water jacket spacer and an arc-shaped center area of the inner side of the bore-covering part of the second water jacket spacer. Note that the arc-shaped center area of the inner side of the bore-covering part refers to an area that is situated on the inner side of the center area of the arc-shaped bore-covering part when viewed from above.

The positions of the bridge (that is provided to the integrally molded product) in the upward-downward direction is appropriately selected taking account of the shape of the first water jacket spacer and the second water jacket spacer.

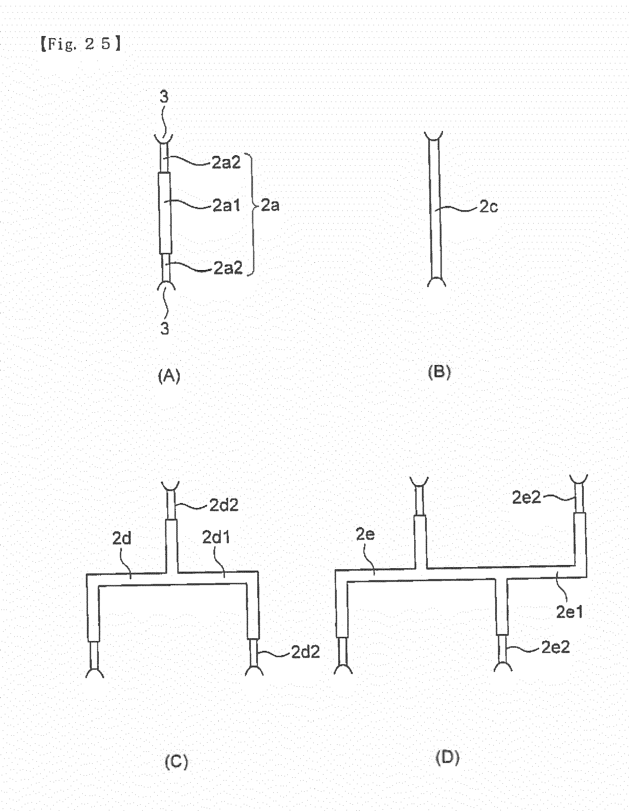

Examples of the bridge that is provided to the integrally molded product include a bridge 2a (see (A) in FIG. 25) that includes one linear (when viewed from above) bridge main body 2a1, and bridge thin parts 2a2 that link either end of the bridge main body 2a1 and the inner side of the inter-bore part of the water jacket spacer, a bridge 2c (see (B) in FIG. 25) that includes only one linear (when viewed from above) bridge main body, a bridge 2d or 2e (see (C) or (D) in FIG. 25) that includes a bridge main body 2d1 or 2e1 that includes one linear section that extends in the longitudinal direction in which the water jacket spacer extends (when viewed from above), and a branch section that branches from the section that extends in the longitudinal direction, and extends toward the inner side of the water jacket spacer, and a bridge thin part 2d2 or 2e2 that links the end of the branch section and the inner side of the water jacket spacer, a bridge that includes one linear section that extends in the longitudinal direction in which the water jacket spacer extends (when viewed from above), and a branch section that branches from the section that extends in the longitudinal direction, and extends toward the inner side of the water jacket spacer, and the like. The bridge 2d and 2e (see (C) and (D) in FIG. 25) are formed as a bridge that links the inner side of the first water jacket spacer and the inner side of the second water jacket spacer when the first water jacket spacer and the second water jacket spacer that face each other are disposed so that the inter-bore parts are shifted from each other (i.e., when the first water jacket spacer and the second water jacket spacer are disposed so that the inter-bore part of one of the first water jacket spacer and the second water jacket spacer faces the area between the inter-bore parts of the other of the first water jacket spacer and the second water jacket spacer (e.g., an area around the center of each bore)). Note that the shape of the bridge is not limited to those described above.

The integrally molded product may include an inter-bridge bridge 5 that includes an end bridge 2b that is provided on each end of a first water jacket spacer It and a second water jacket spacer 1t, and one or more inter-bore bridges 2a, and links a center area of the inter-bore bridge and a center area of the end bridge that is situated adjacent to the inter-bore bridge, or links center areas of the inter-bore bridges that are situated adjacent to each other (see an integrally molded product 10m illustrated in FIG. 26).

The injection mold that is used for the injection molding process may be placed in an arbitrary way. The injection mold is normally placed so that the movable mold moves in the vertical direction, or moves in the horizontal direction.

The molded product obtained by the injection molding process normally includes a main body, a spool that serves as a molten resin passage that extends from a nozzle of an injection molding machine to a runner, a runner that serves as an intermediate molten resin passage that extends from the spool to a gate, and a gate that serves as an inlet through which a molten resin flows from the runner into the molding space (main body molding space). The integrally molded product produced using the method for producing a water jacket spacer according to one embodiment of the invention may further include a spool, a runner, and a gate. The integrally molded product may be configured so that the bridge main body or the inter-bridge bridge serves as a runner, and the bridge thin part serves as a gate. When implementing the method for producing a water jacket spacer according to one embodiment of the invention, the position at which the molten resin is injected into the injection mold is appropriately selected taking account of the shape of the integrally molded product, the shape of the injection mold, and the like. For example, the molten resin may be injected from the position of the bridge situated at each end, or may be injected from the position of the water jacket spacer, or may be injected from the center position of the inter-bridge bridge.

The synthetic resin that is subjected to the injection molding process that is implemented by the method for producing a water jacket spacer according to one embodiment of the invention to form the integrally molded product is not particularly limited. A resin that is normally used as a material for producing a water jacket spacer that is disposed in the groove-like coolant passage provided to the cylinder block may be used as the synthetic resin.

When implementing the method for producing a water jacket spacer according to one embodiment of the invention, the integrally molded product is ejected by the ejection step, and sufficiently cooled and solidified, and the bridge is separated (cut) from the first water jacket spacer and the second water jacket spacer. When the integrally molded product includes a part (e.g., spool, runner, or gate) that is formed together with the main body by injection molding, and is unnecessary for the water jacket spacer, such a part is also separated (cut) from the water jacket spacer.

According to the method for producing a water jacket spacer according to one embodiment of the invention, since the integrally molded product that is formed inside the injection mold by means of injection molding includes the bridge that links the inner side of the first water jacket spacer and the inner side of the second water jacket spacer, it is possible to prevent the occurrence of an adhesion-to-slide phenomenon in which the first water jacket spacer or the second water jacket spacer adheres to the slide mold when the slide mold (1) moves in a direction at an angle of ±15° or less with respect to a direction that is perpendicular to a direction in which the cylinder bores are arranged, and is perpendicular to the moving direction of the movable mold, so as to move away from the integrally molded product, when the injection mold is opened.

### INDUSTRIAL APPLICABILITY

The embodiments of the invention can prevent the occurrence of an adhesion-to-slide phenomenon during injection molding, and can efficiently produce a water jacket spacer having a shape that corresponds to part of the groove-like coolant passage along the circumferential direction by means of injection molding.

### REFERENCE SIGNS LIST

1a, 1g1, 1g2, 1j, 1k, 1m, 1p, 1q, 1r1, 1r2, 1s1, 1s2, 1t, 1u: Water jacket spacer
2: Bridge
2a: Inter-bore bridge
2a1: Bridge main body
2a2: Bridge thin part
2b: End bridge
3: Inter-bore part of water jacket spacer
4: End of water jacket spacer
5: Inter-bridge bridge
8: Bore-covering part of water jacket spacer
9: Inter-bore wall
10, 10a, 10b, 10c, 10d, 10e, 10f, 10g, 10h, 10i, 10j, 10k, 10m: Integrally molded product
11: Cylinder block
12: Bore
12a1, 12a2: End bore
12b1, 12b2: Intermediate bore
13: Cylinder bore wall
14: Groove-like coolant passage
15: Coolant inlet
16: Coolant outlet
17: Cylinder bore-side wall surface of groove-like coolant passage
18: Wall surface of groove-like coolant passage opposite to cylinder bore-side wall surface
20a, 20b: One side of groove-like coolant passage
21: Coolant flow change member
22: Coolant flow prevention member
30: Injection mold
31, 316: Stationary mold
32a, 32b, 321a, 321b, 322a, 322b, 323a, 323b, 324a, 324b, 325a: Slide mold (1)
33, 331, 332, 333, 334, 335, 336: Movable mold
34: Molding space for molding integrally molded product
35: Upward-downward direction with respect to water jacket spacer
36: Direction that is perpendicular to upward-downward direction with respect to water jacket spacer and is perpendicular to moving direction of movable mold
37: Direction in which cylinder bores are arranged
38a, 38b, 381a, 381b, 382a, 382b, 383a, 383b, 384a, 384b, 385, 386, 386b: Moving direction of slide mold (1) during mold-opening step
351, 356: Moving direction of movable mold
391a, 391b, 392a, 392b: Moving direction of slide mold (2) during mold-opening step
101: Boundary of cylinder bore-side wall surface of groove-like coolant passage with respect to each bore
141a, 141b: Half of groove-like coolant passage in circumferential direction

## Claims

1. A method for producing a water jacket spacer (1) comprising subjecting a synthetic resin to an injection molding process to produce a water jacket spacer (1), the water jacket spacer (1) being disposed in part of a groove-like coolant passage (14) along a circumferential direction, the groove-like coolant passage (14) being provided to a cylinder block (11) of an internal combustion engine that has cylinder bores (12),
wherein, the injection molding process comprising a clamping step that clamps an injection mold (30), an injection step that injects the synthetic resin in a molten state, a solidification step that cools and solidifies the synthetic resin while keeping pressure, a mold-opening step that opens the injection mold (30), and an ejection step that ejects an integrally molded product (10) from the injection mold (30),
the injection mold (30) comprising a stationary mold (31, 316), a movable mold (33, 331, 332, 333, 334, 335, 336) that moves in an upward-downward direction with respect to the water jacket spacer (1), and at least one slide mold (1) (32, 321, 322, 323, 324, 325) that moves in a direction at an angle of ±15° or less with respect to a direction that is perpendicular to a direction in which the cylinder bores (12) are arranged, and is perpendicular to a moving direction of the movable mold (33, 331, 332, 333, 334, 335, 336), and forming a molding space when clamped by the clamping step, the molding space producing the integrally molded product (10) that comprises at least a first water jacket spacer (1) having a shape formed by one arc or a shape formed by two or more arcs that are linked to each other when viewed from above, a second water jacket spacer (1), which is separable from the first water jacket spacer (1), having a shape formed by one arc or a shape formed by two or more arcs that are linked to each other when viewed from above, and a bridge (2), the first water jacket spacer (1) and the second water jacket spacer (1) being provided so that inner sides thereof are situated opposite to each other, and the bridge (2) linking an inner side or an end of the first water jacket spacer (1), and an inner side or an end of the second water jacket spacer (1), and
the mold-opening step moving the movable mold (33, 331, 332, 333, 334, 335, 336) in the upward-downward direction with respect to the water jacket spacer (1), and moving the slide mold (1) (32, 321, 322, 323, 324, 325) in a direction at an angle of ±15° or less with respect to the direction that is perpendicular to the direction in which the cylinder bores (12) are arranged, and is perpendicular to the moving direction of the movable mold (33, 331, 332, 333, 334, 335, 336), to open the injection mold (30).

2. The method for producing a water jacket spacer (1) according to claim 1, wherein
the bridge (2) comprises an inter-bore bridge (2a) that links an inner side of an inter-bore part of the first water jacket spacer (1), and an inner side of an inter-bore part of the second water jacket spacer (1), and an end bridge (2b) that links the end of the first water jacket spacer (1) and the end of the second water jacket spacer (1).

3. The method for producing a water jacket spacer (1) according to claim 2, wherein
the integrally molded product (10) further comprises an inter-bridge bridge (5) that links a center area of the inter-bore bridge (2a) and a center area of the end bridge (2b) that is situated adjacent to the inter-bore bridge (2a), or links center areas of the inter-bore bridges (2a) that are situated adjacent to each other.

## Patentansprüche

1. Ein Herstellungsverfahren für einen Wassermantelabstandshalter (1) umfassend
Unterziehen eines Kunstharzes einem Spritzgussverfahren zur Herstellung eines Wassermantelabstandshalters (1), wobei der Wassermantelabstandshalter (1) in einen Teil eines rillenartigen Kühlmitteldurchgangs (14) entlang einer Umfangsrichtung angeordnet ist, wobei der rillenartige Kühlmitteldurchgang (14) an einem Zylinderblock (11) eines Verbrennungsmotors angeordnet ist, der Zylinderbohrungen (12) aufweist, wobei
das Spritzgussverfahren umfasst einen Klemmschritt, der eine Spritzgussform (30) klemmt, einen Spritzschritt, der das Kunstharz in geschmolzenem Zustand einspritzt, einen Erstarrungsschritt, der das Kunstharz unter Beibehaltung des Drucks abkühlt und verfestigt, einen Formöffnungsschritt, der die Spritzgussform (30) öffnet und einen Ausgabeschritt, der ein einstückig geformtes Produkt (10) aus der Spritzgussform (30) ausgibt;
die Spritzgussform (30) umfasst eine stationäre Form (31, 316), eine bewegliche Form (33, 331, 332, 333, 334, 335, 336), die sich in Bezug auf den Wassermantelabstandshalter (1) in Aufwärts-Abwärts-Richtung bewegt und mindestens eine Gleitform (1) (32, 321, 322, 323, 324, 325), die sich in einer Richtung in einem Winkel von ± 15° oder weniger in Bezug auf eine Richtung senkrecht zu einer Richtung bewegt in dem die Zylinderbohrungen (12) angeordnet sind und senkrecht zu einer Bewegungsrichtung der beweglichen Form (33, 331, 332, 333, 334, 335, 336) ist und einen Formraum bildet, wenn sie durch den Klemmschritt festgeklemmt wird; wobei der Formraum, der das einstückig geformte Produkt (10) erzeugt, das zumindest einen ersten Wassermantelabstandshalter (1) umfasst, der eine durch einen Bogen gebildete Form oder eine durch zwei oder mehr Bögen gebildete Form, die von oben gesehen miteinander verbunden sind, aufweist, einen zweiten Wassermantelabstandshalter (1), der von dem ersten Wassermantelabstandshalter (1) trennbar ist und der eine durch einen Bogen gebildete Form oder eine durch zwei oder mehr Bögen gebildete Form, die von oben gesehen miteinander verbunden sind, aufweist, und eine Brücke (2), wobei der erste Wassermantelabstandshalter (1) und der zweite Wassermantelabstandshalter (1) so angeordnet sind, dass ihre Innenseiten einander gegenüberliegen, und die Brücke (2), die eine Innenseite oder ein Ende des ersten Wassermantelabstandshalters (1) und eine Innenseite oder ein Ende des zweiten Wassermantelabstandshalters (1) verbindet, und
der Formöffnungsschritt zum Öffnen der Spritzgussform (30) die bewegliche Form (33, 331, 332, 333, 334, 335, 336) in Aufwärts-Abwärts-Richtung in Bezug auf den Wassermantelabstandshalter (1) bewegt und die Gleitform (32, 321, 322, 323, 324, 325) in einer Richtung in einem Winkel von ± 15 ° oder weniger in Bezug auf die Richtung bewegt, die senkrecht zu der Richtung ist, in der die Zylinderbohrungen (12) angeordnet sind, und senkrecht zu der Bewegungsrichtung der beweglichen Form (33, 331, 332, 333, 334, 335, 336) ist.

2. Das Herstellungsverfahren für einen Wassermantelabstandshalter (1) gemäß Anspruch 1, wobei
die Brücke (2) eine Zwischenbohrungsbrücke (2a) umfasst, die eine Innenseite eines Zwischenbohrungsteils des ersten Wassermantelabstandshalters (1) und eine Innenseite eines Zwischenbohrungsteils des zweiten Wassermantelabstandshalters (1) verbindet und eine Endbrücke (2b), die das Ende des ersten Wassermantelabstandshalters (1) und das Ende des zweiten Wassermantelabstandshalters (1) verbindet.

3. Das Herstellungsverfahren für einen Wassermantelabstandshalter (1) gemäß Anspruch 2, wobei
das einstückig geformte Produkt (10) ferner eine Zwischenbrückenbrücke (5) umfasst, die einen Mittelbereich der Zwischenbohrungsbrücke (2a) und einen Mittelbereich der Endbrücke (2b), der neben der Zwischenbohrungsbrücke (2a) liegt, verbindet oder Mittelbereiche der Zwischenbohrungsbrücken (2a), die nebeneinander liegen, verbindet.

## Revendications

1. Procédé de fabrication d'une entretoise (1) pour chemise de refroidissement comprenant l'exposition d'une résine synthétique à un processus de moulage par injection afin de produire une entretoise (1) pour chemise de refroidissement, l'entretoise (1) pour chemise de refroidissement étant disposée dans une partie d'un passage de refroidissement en forme de rainure (14) le long de la direction circonférentielle, le passage de refroidissement en forme de rainure (14) étant disposé sur un bloc cylindre (10) de moteur à combustion interne qui comporte des alésages de cylindres (12),
dans lequel le processus de moulage par injection comprend une étape de serrage qui bloque un moule d'injection (30), une étape d'injection qui injecte la résine synthétique à l'état fondu, une étape de solidification qui refroidit et qui solidifie la résine synthétique tout en maintenant une certaine pression, une étape d'ouverture de moule qui ouvre le moule d'injection (30) et une étape d'éjection qui éjecte un produit moulé en une seule pièce (10) hors du moule d'injection (30),
le moule d'injection (30) comprend un moule fixe (31, 316), un moule mobile (33, 331, 332, 333, 334, 335, 336) qui se déplace dans la direction haut bas par rapport à l'entretoise (1) pour chemise de refroidissement et au moins un moule coulissant (1) (32, 321, 322, 323, 324, 325) qui se déplace dans une direction orientée avec un angle de ± 15° ou moins par rapport à une direction qui est perpendiculaire à la direction dans laquelle sont agencés les alésages de cylindres (12), et il est perpendiculaire à la direction de déplacement du moule mobile (33, 331, 332, 333, 334, 335, 336) et forme un espace de moulage lorsqu'il est bloqué par l'étape de serrage, l'espace de moulage produisant le produit moulé en une seule pièce (10) qui comprend au moins une première entretoise (1) pour chemise de refroidissement présentant une forme constituée d'un seul arc ou bien une forme constituée de deux arcs ou plus qui sont reliés l'un à l'autre lorsqu'ils sont vus de dessus, une seconde entretoise (1) pour chemise de refroidissement séparable de la première entretoise (1) pour chemise de refroidissement présentant une forme constituée d'un seul arc ou bien une forme constituée de deux arcs ou plus qui sont reliés l'un à l'autre lorsqu'ils sont vus de dessus, ainsi qu'un pont (2); la première entretoise (1) pour chemise de refroidissement et la seconde entretoise (1) pour chemise de refroidissement étant disposées de sorte à ce que leurs côtés internes soient opposés l'un à l'autre, et le pont (2) reliant un côté interne ou une extrémité de la première entretoise (1) pour chemise de refroidissement et un côté interne ou une extrémité de la seconde entretoise (1) pour chemise de refroidissement, et
l'étape d'ouverture de moule déplace le moule mobile (33, 331, 332, 333, 334, 335, 336) dans la direction haut bas par rapport à l'entretoise (1) pour chemise de refroidissement, et elle déplace le moule coulissant (1) (32, 321, 322, 323, 324, 325) dans une direction orientée avec un angle de ± 15° ou moins par rapport à la direction qui est perpendiculaire à la direction dans laquelle sont agencés les alésages de cylindres (12), et elle est perpendiculaire à la direction de déplacement du moule mobile (33, 331, 332, 333, 334, 335, 336) pour ouvrir le moule d'injection (30).

2. Procédé de fabrication d'une entretoise (1) pour chemise de refroidissement selon la revendication 1, dans lequel :
le pont (2) comprend un pont entre alésages (2a) qui relie le côté interne d'un composant entre alésages de la première entretoise (1) pour chemise de refroidissement et un côté interne d'un composant entre alésages de la seconde entretoise (1) pour chemise de refroidissement, ainsi qu'un pont terminal (2b) qui relie l'extrémité de la première entretoise (1) pour chemise de refroidissement et l'extrémité de la seconde entretoise (1) pour chemise de refroidissement.

3. Procédé de fabrication d'une entretoise (1) pour chemise de refroidissement selon la revendication 2, dans lequel :
le produit moulé en une seule pièce (10) comprend en outre un pont entre ponts (5) qui relie la zone centrale du pont entre alésages (2a) et la zone centrale du pont terminal (2b) qui est située de façon adjacente au pont entre alésages (2a), ou bien qui relie les zones centrales des ponts entre alésages (2a) adjacents l'un à l'autre.
